(19) **Europäisches Patentamt European Patent Office Office européen des brevets**

(11) **EP 3 363 733 B1**

(12) **EUROPEAN PATENT SPECIFICATION**

(45) Date of publication and mention
of the grant of the patent:
**10.11.2021 Bulletin 2021/45**

(51) Int Cl.:
***B64C 21/10*** *(2006.01)*

(21) Application number: **18157438.5**

(22) Date of filing: **19.02.2018**

(54) **PASSIVE FLOW CONTROL MECHANISM FOR REDUCING AND/OR SUPPRESSING TOLLMIEN-SCHLICHTING WAVES, DELAYING TRANSITION TO TURBULENCE AND REDUCING DRAG**

PASSIVSTRÖMUNGSTEUERUNGSMECHANISMUS ZUR ABSCHWÄCHUNG UND/ODER UNTERDRÜCKUNG VON TOLLMIEN-SCHLICHTING-WELLEN, ZUR VERZÖGERUNG DES ÜBERGANGS ZU TURBULENZEN UND ZUR VERRINGERUNG DES WIDERSTANDS

MÉCANISME DE CONTRÔLE D'ÉCOULEMENT PASSIF DESTINÉ À ATTÉNUER ET/OU SUPPRIMER LES ONDES DE TOLLMIEN-SCHLICHTING, RETARDER UNE TRANSITION À LA TURBULENCE ET RÉDUIRE LA TRAÎNÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2017 US 201762460784 P**

(43) Date of publication of application:
**22.08.2018 Bulletin 2018/34**

(73) Proprietor: **Lombard, Jean-Eloi William
1207 Geneva (CH)**

(72) Inventor: **Lombard, Jean-Eloi William
1207 Geneva (CH)**

(74) Representative: **Mötteli-Mantelli, Novella et al
Da Vinci Partners LLC
Rathausgasse 1
9320 Arbon (CH)**

(56) References cited:
**EP-A1- 3 323 514     EP-A2- 1 283 163
GB-A- 557 581     GB-A- 2 436 861
US-A- 5 860 626**

## Description

### Cross Reference to Related Applications

This application claims the benefit of U.S. Provisional Application 62/460,784, filed February 18, 2017, entitled: PASSIVE FLOW CONTROL MECHANISM FOR SUPPRESSING TOLLMIEN-SCHLICHTING WAVES, DELAYING TRANSITION TO TURBULENCE AND REDUCING DRAG.

### Background of the Invention

This invention concerns the reduction or even complete avoidance of turbulent flow when a viscous fluid flows over a body, e. g. a solid body surface, or a solid body moves in a viscous fluid, i. e. a physical body in which drag is generated where there is a relative movement between the body and a viscous fluid.

It is known that turbulent flow leads to increase energy consumption and may cause vibrations and noise. In many situations where a solid body has to move through a viscous fluid, e. g., an airplane flying in the atmosphere, a propeller blade rotating in air, or a ship moving through water, this is undesirable. The same is true where a viscous fluid, such as air or water, moves over a static body. Laminar flow is preferred. However, it is difficult to avoid turbulent flow. The theoretical understanding of turbulence, including the factors responsible for laminar flow turning into turbulent flow, is still very limited.

Largely based on empirical studies and tests, various methods for delaying or even suppressing the onset of turbulent flow have been developed. It is, for example, known to provide stream guides, bumps and other projections on the suction side of an airplane wing in an attempt at keeping the airflow across the surface laminar. Such earlier attempts have met with some success. However, it is still a very desirable goal to develop better technologies for reducing or even preventing the occurrence of turbulent flow and instead preserving laminar flow to the greatest possible extent.

There have been several attempts at controlling the growth of Tollmien-Schlichting waves in boundary layers. In particular, the aeronautical industry has been pushing towards so called super-laminar, or smart wings, where turbulence is delayed and/or suppressed. The main competing method pursued in academia and industry are miniature vortex generators, passive miniature blowing/sucking mechanisms as well as thermal management of the leading edge and suction side.

The tiny blowing holes have been successfully deployed by Boeing on early production examples of their Dreamliner (World Wide Web: wired.co.uk/article/manipulating-airflow-on-777). The following two patents appear to relate to this product: US 5772156 A and in particular US 7866609 B2.

To our knowledge, the *tiny holes* tested by Boeing are the only case of a passive laminar flow control mechanism that has reached production together with super-laminar wings, or so-called *smart wings,* which is the term generally used by the aeronautical community to refer to wings with profiles that both leverage favorable pressure gradients and are built with tight enough tolerances that they do not naturally provoke transition to turbulence because of surface roughness inherent to the manufacturing process.

Flow control mechanisms based on blowing/sucking require maintenance of the holes and, in some cases, additional weight and power consumption, which are detrimental to the operational performance of the aircraft, due to compressors adapted to blow/suck air into the boundary.

Until now, drag has been reduced by introducing a distributed suction system to remove part of the boundary layer. The external regions, such as wings or vertical tail planes of the aircraft, are perforated in various regions where the flow is collected into a common plenum either leveraging naturally occurring pressure gradients or by a turbo-compressor or electrically driven compressor.

Wing designs which aim to reduce drag by passive or active means of flow control as well as load control are often referred to as "smart wings". An example "smart wing" design is the vertical tail plane of the Boeing 777X. Current passive smart wing designs rely solely on the high manufacturing tolerance and favorable pressure gradients so as to produce naturally laminar wings thanks to a very smooth surface.

For laminar flow control systems based on suction holes to provide laminar flow over a significant portion of the aerodynamic surface complex ducting are required as well as weighty compressors and increased energy consumption possibly detracting from the potential economic benefits. Passive flow removal and associated systems and methods such as (US 7866609 B2) aim to reduce the weight and power requirements by replacing the use of compressors by leveraging naturally occurring pressure gradients. However these methods still require complex ducting and can be further complicated by using movable doors for controlling the amount of mass flow through the porous surfaces.

Document EP1283163A2 discloses a device for reducing fluidic friction drag over a component with a fine rib configuration arranged on the surface of the component. The ribs are arranged perpendicular to the flow direction. The contour of the ribs can be alternately concave and convex.

The past failures in generating Laminar Flow Control over wings have been driven by a lack of a clear economic benefit in implementing these strategies. In particular, excess weight and added power consumption of the compressor or heating system together with their weak resilience to environmental perturbations such as ice-clouds and insects, or more generally debris, are most commonly mentioned.

What is needed therefore is a system that requires no additional ducting, power or weight, thereby circumventing the three challenges that have to this day posed a challenge to boundary flow control mechanisms from offering competitive economic benefits.

What is needed is a wing design that leverages this high accuracy design but allows for the wing to both remain laminar over a wider range of operational conditions as well as relaminarize when the perturbations subsides thereby offering slower times to transition to turbulence when the perturbation occurs improving efficiency in a time-averaged sense.

What is needed is a design that reduces drag over a wider range of operational conditions and improves robustness over competing products is desired.

## Summary of the Invention

The invention is defined in claim 1 and embodiments thereof are defined in the dependent claims.

The invention meets the needs identified above and is a passive flow control mechanism for suppressing Tollmien-Schlichting waves on a surface, whereby delaying transition to turbulence and reducing drag is achieved by one or more, forward facing smooth steps located within the boundary layer of the surface. Where this surface is a lifting surface, the steps are located on the suction side of the lifting surface.

The invention is made up of multiple forward facing smooth steps whose two dimensions, height and width, are defined, respectively by a percentage of the boundary layer height and the local Tollmien-Schlichting wave length.

The smooth forward facing steps are manufactured as high precision, low tolerance, roughness in the lifting surface, or body, such that there are no imperfections in the surface promoting transition to turbulence. In the case of multiple forward facing smooth steps, each step is positioned with respect to another so that it does not increase the shear stress on the neighboring steps.

The shape of these components, i.e., that they are smooth, is unique. Their location on the body as well as their location with respect to one another is equally unique.

The invention is based on the unexpected finding that turbulent flow can be reduced - in favor of laminar flow - or even suppressed, when a body adapted and intended for relative movement with respect to a fluid, especially a viscous fluid such as air or water, is provided with a surface that has a profile comprising two or more steps facing towards the flow, in the relative flow direction, each of which has a height between 4% and 30% of the local boundary layer thickness $\delta_{99}$ of the fluid contacting the body surface in the vicinity of the step. The local boundary layer thickness $\delta_{99}$ is defined and explained in more detail hereinafter.

Generally, the invention can be used wherever a viscous fluid flows on or over a solid body surface, or where a solid body moves in or through a viscous fluid, and laminar flow is desired for whatever reason. The bodies of the invention include lifting and non-lifting surfaces. Among the lifting surfaces of the invention are airfoils, such as the wings of airplanes. Further such bodies include propeller blades, wind turbine blades, low-pressure turbine blades in aero engines, turbine blades in hydropower plants, hydrofoils, etc. Among the non-lifting surfaces are the vertical tail planes of an airplane, the bodywork exterior of vehicles traveling through air and/or water, the interior walls of pipes and tubes etc.

In presently preferred embodiments, the height of the step is not more than 20% of the said local boundary layer thickness ($\delta_{99}$).

The step is smooth in that the profile of the wing can be defined by a function $f(x) \in C^1$ where x is the strewamise component, ranging from 0 at the leading edge of the wing to 1 at the trailing edge of the wing. Furthermore, the step is smooth when the steps consists of first a convex and then concave shape, height of less than 20% of the local boundary layer thickness and typical width of more than three times the local boundary layer thickness.

According to the invention the profile is made up of two or more of these steps extending substantially parallel to each other.

The steps are spaced from each other by at least the width of the step such that said width of the step is the minimum distance, in the relative flow direction, between two directly neighboring steps. This width should not be too great, because otherwise, the efficiency of the steps may be reduced. In presently preferred embodiments, the width of the step is between two and ten times the local boundary layer thickness $\delta_{99}$. It is even more preferred that the width is between 3 and 5 times the local boundary layer thickness $\delta_{99}$. In some preferred embodiments, the width is about 4 times $\delta_{99}$.

The efficiency of the invention is increased when a multiplicity of substantially parallel steps is provided on at least 50% of the total area of the surface, more preferred on at least 75% of the total area of the surface, and especially preferred on substantially all of the total surface area of the surface. In other words, the steps will preferably extend substantially over the complete surface of the body.

According to the invention the height of the steps increase in relative flow direction. In other words, the lowest step will be the one closest to the leading edge and the tallest or highest step will be the one closest to the trailing edge of the body, e. g. an airfoil.

Using the wings of a typical contemporary aircraft (such as an Airbus 320 or a Boeing 777) as an example, and considering the typical cruising speeds of such aircraft, for a wing chord of about 1m, the steps could range in height ranging from about 10 micrometers near the leading edge of the wing, to about 3 mm near the trailing edge of the wing.

## Brief description of the Drawings

The attached drawings represent, by way of example, different embodiments of the subject of the invention.

FIG. **1A** is a perspective schematic view of a section of system of the invention.
FIG. **1B** is a perspective view of a section of another embodiment of system of the invention.
FIG. **2** are diagrams showing horizontal and vertical velocity profiles around steps.
FIG. **3** are diagrams showing a method of detecting the effect of smooth steps on the 2D stability of the boundary layer.
FIG. **4** are contour plots illustrating changes of velocity fields from the Blasius profile.
FIG. **5** are diagrams showing the horizontal and vertical velocity profiles at three different positions.
FIG. **6** is a diagram showing that $\delta^*$ increases in front of the step and decreases over the step.
FIG. **7** are contour plots illustrating $|\tilde{u}|/A_0$ for steps of different magnitudes.
FIG. **8** are contour plots illustrating $|\tilde{u}|/A_0$ for two equal height steps of different magnitudes.
FIG. **9** are diagrams showing the relative amplitude of the Tollmien-Schlichting modes A/Ao as a function of stream-wise location for different step heights.
FIG. **10** are diagrams illustrating a comparison of the top and bottom profiles of the Tollmien-Schlichting modes at different locations over a single smooth step.
FIG. **11** are diagrams illustrating a comparison of the normalized amplitude of the perturbation for steps at different locations.
FIG. **12** are diagrams illustrating a comparison of the normalized amplitude of the perturbation for a low frequency Tollmien-Schlichting wave.
FIG. **13** are diagrams illustrating the effect of a smooth step for the Tollmien-Schlichting wave with a very low frequency.
FIG. **14** is a perspective view of a computational setup with Blasius boundary layer profile at the inflow, the disturbance strip and two smooth steps used for the DNS.
FIG. **15** is an illustration of instantaneous contours of stream-wise velocity in the xy-plane for K- and H-type transition scenarios for a flat plate.
FIG. **16** are diagrams illustrating a comparison of time- and spanwise-averaged skin friction versus stream-wise position for K- and H-type transition scenarios for a flat plate.
FIG. **17** are diagrams illustrating a comparison of the energy in modes (0,1) and (0,2) respectively versus stream-wise position over a flat plate and two smooth steps for K- and H-type scenarios.
FIG. **18** are diagrams illustrating a comparison of time- and spanwise-averaged skin friction versus stream-wise position for transition induced by different white noise levels at an early stage.
FIG. **19** are diagrams illustrating a comparison of time- and spanwise-averaged skin friction versus stream-wise position for transition induced by different white noise levels at the fully developed stage.
FIG. **20** are diagrams comparing transition property of spanwise-averaged skin friction without and with phase shift.

Those skilled in the art will appreciate that elements in the Figures are illustrated for simplicity and clarity and have not necessarily been drawn to scale. For example, dimensions may be exaggerated relative to other elements to help improve understanding of the invention and its embodiments. Furthermore, when the terms "first", 'second', and the like are used herein, their use is intended for distinguishing between similar elements and not necessarily for describing a sequential or chronological order. Moreover, relative terms like 'front', 'back', 'top' and 'bottom', and the like in the Description and/or in the claims are not necessarily used for describing exclusive relative position. Those skilled in the art will therefore understand that such terms may be interchangeable with other terms, and that the embodiments described herein are capable of operating in other orientations than those explicitly illustrated or otherwise described.

## Detailed Description of a Preferred Embodiment

The following description is not intended to limit the scope of the invention in any way as it is exemplary in nature and serves to describe the best mode of the invention known to the inventors as of the filing date hereof.

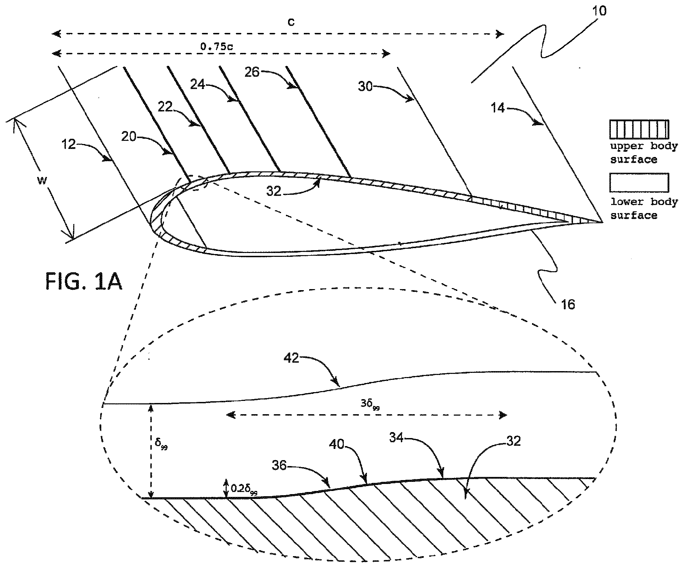

Referring now to **FIG 1A,** an overview is provided of a preferred embodiment of the invention on a wing with a leading edge 12, trailing edge 14, the invention as a leading-edge device 32, a bottom or pressure side of the wing 16, a top surface such as a flap 10. The leading edge device spans 75% of the cord in this example with four smooth forward facing steps 20, 22, 24, 26. A zoom in on the first step is represented in the dashed circle below with a laminar boundary layer of height $\delta_{99}$ over a smooth forward facing step of profile f(x), where is x is a streamwise coordinate, height h=0.2$\delta_{99}$ and width d=3$\delta_{99}$ with a characteristic first convex and then concave section.

Here, the steps are not of same height, the width is also not the same between all steps. Where the steps increase in height from the leading to the trailing edge, the width also increases. In the above example of an aircraft wing, the width could increase from 0.1 mm near the leading edge, to 10 mm near the trailing edge.

Because of the ubiquity of boundary layers there are numerous applications in which the performance of the product can be improved by controlling the growth of Tollmien-Schlichting waves. In particular, we can mention three applications in the field of aeronautics alone:

1) Delaying transition over the blades of a low-pressure gas turbine
2) Delaying transition over the lifting wing of an aero-vehicle such as an airplane or the rotor blades of a helicopter
3) Delaying the transition on surfaces in view of reducing drag such as the vertical tail plane of an aircraft or nacelle of an aero-engine.

This invention can also be applied for improving the mass flow in pipes or ducts, such as oil and gas pipelines, stenotic pipes, and artificial arteries.

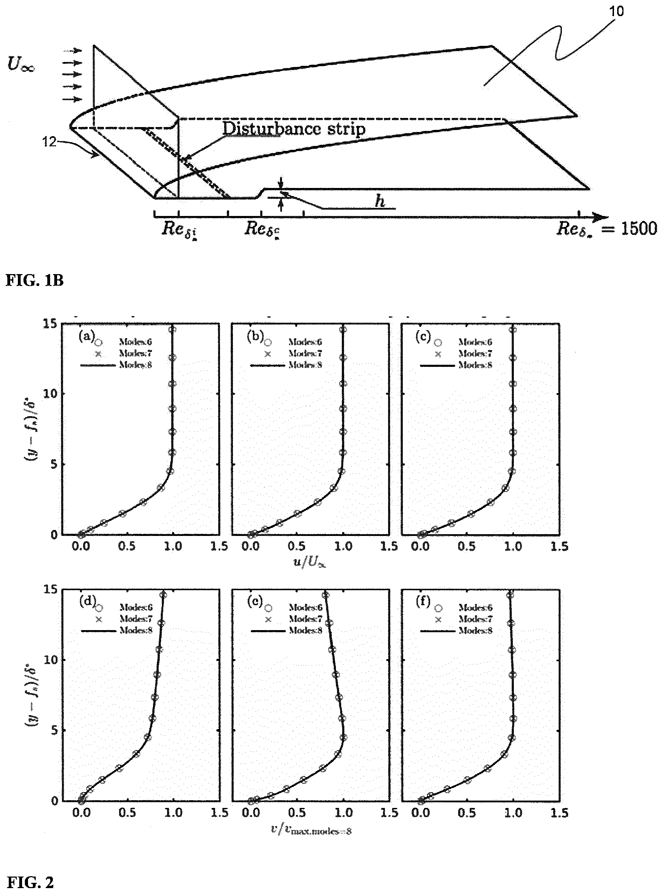

Referring to **FIG. 1B**, we consider a smooth, transversely -uniform forward facing step defined by the Gauss error function of height 4-30% and four times the width of the local boundary layer thickness $\delta_{99}$. The boundary layer flow over a smooth forward-facing stepped plate is studied with particular emphasis on stabilization and destabilization of the two-dimensional Tollmien-Schlichting (TS) waves and subsequently on three-dimensional disturbances at transition. The interaction between TS waves at a range of frequencies and a base flow over a single or two forward facing smooth steps is conducted by linear analysis. The results indicate that for a high frequency TS wave, the amplitude of the TS wave is attenuated in the unstable regime of the neutral stability curve corresponding to a flat plate boundary layer. Furthermore, it is observed that two smooth forward facing steps lead to a more acute reduction of the amplitude of the TS wave. When the height of a step is increased to more than 20% of the local boundary layer thickness for a fixed width parameter, the TS wave is amplified and thereby a destabilization effect is introduced. Therefore, stabilization or destabilization effect of a smooth step is typically dependent on its shape parameters. To validate the results of the linear stability analysis, where a high-frequency TS wave is damped by the forward facing smooth steps direct numerical simulation (DNS) is performed. The results of the DNS correlate favorably with the linear analysis and show that for the investigated high frequency TS wave, the K-type transition process is altered whereas the onset of the H-type transition is delayed. The results of the DNS suggest that for a high-frequency perturbation with the non-dimensional frequency parameter $F=\omega v/U_\infty^2 \cdot 10^6 = 150$ where $\omega$ and $U_\infty$ denote the perturbation angle frequency and freestream velocity magnitude, respectively, and in the absence of other external perturbations, two forward facing steps of height 5% and 12% of the boundary layer thickness delayed H-type transition scenario and completely suppresses it for the K-type transition. In environments with low levels of disturbances, transition to turbulence is initiated by the exponential amplification of the Tollmien-Schlichting (TS) waves followed by the growth of secondary instabilities. When the r.m.s amplitude of the TS waves exceeds a threshold value of typically 1% of the free stream velocity, three-dimensional (3D) structures evolve, which are characterized by nearly periodic transversely alternating *peaks* and *valleys* (Λ-shaped vortex loop) (Herbert 1988; Cossu & Brandt 2002). Growth of these 3D structures is very rapid (over a convective time scale), which is explained by secondary instability theory. Fundamental and subharmonic instabilities lead respectively to aligned and staggered patterns of Λ-structures. Because of the dramatic growth of the 3D disturbances, nonlinear deformation of the flow field produces embedded highly-inflectional instantaneous velocity profiles. The highly-inflectional instantaneous velocity profiles are unstable with respect to high-frequency disturbances that cause *spikes* (intensive streamwise velocity fluctuation (Klebanoff 1962). The onset of spikes initiates the ultimate breakdown of the laminar flow into turbulence. This path to transition was explained by Herbert (1988) and more recently by Cossu *et al.* (2004).

The classical process of laminar-turbulent transition is subdivided into three stages: (1) receptivity, (2) linear eigenmode growth and (3) non-linear breakdown to turbulence. A longstanding goal of laminar flow control (LFC) is the development of drag-reduction mechanisms by delaying the onset of transition. The process of laminar to turbulent transition has been shown to be influenced by many factors such as surface roughness elements, slits, surface waviness and steps. These surface imperfections can significantly influence the laminar-turbulent transition by influencing the growth of TS waves in accordance with linear stability theory and then non-linear breakdown along with three dimensional effects Kachanov (1994). Since the existence of TS waves was confirmed by Schubauer (1948), numerous studies aiming to stabilize or destabilize the TS modes have been carried out in order to explore and explain different paths to transition. If the growth of the TS waves is reduced or completely suppressed and, providing no other instability mechanism comes into play, it has been suggested that transition could be postponed or even eliminated (Davies 1996). Despite roughness elements being traditionally seen as an impediment to the stability of the flat plate boundary layer, recent research has shown this might not always be the case. Reibert (1996) used transversely-periodic discrete roughness elements to excite the most unstable wave and found unstable waves occur only at integer multiples of the primary disturbance wavenumber and no subharmonic disturbances are destabilized. Following this research, Saric (1998) continued to investigate the effect of transversely-periodic discrete roughness whose primary disturbance wavenumber did not contain a harmonic at $\lambda_s$=12 mm (the most unstable wavelength according to linear theory and $\lambda_s$ denotes crossflow disturbance wavelength in span direction). By changing the forced fundamental disturbance wavelength to 18mm, the 18, 9 and 6mm wavelength were present. Saric (1998) found the linearly most unstable disturbance (12 mm) was completely suppressed. Shahinfar (2012) showed that classical vortex generators, known for their efficiency in delaying, or even inhibiting, boundary layer separation can be equally effective in delaying transition. An array of miniature vortex generator (MVGs) was shown experimentally to strongly damp TS waves at a frequency $F=\omega v/U_\infty^2 \cdot 10^6 = 102$ and delay the onset of transition. Similar results were obtained for $F=\omega v/U_\infty^2 \cdot 10^6 = 135$ and 178. Downs (2014) found that for F=100, F=110, F=120, and F=130, TS wave amplitudes over transversely periodic surface patterns can be reduced and demonstrated substantial delays in the onset of transition when TS waves are forced with large amplitudes.

Over the past two decades, most investigations on topics of laminar-turbulent transition in a boundary layer have focused on two kinds of problems: the receptivity mechanism (Wu 2001a,b; Saric *et al.* 2002; Ruban *et al.* 2013) and stabilization/destabilization of TS waves (Cossu & Brandt 2002, 2004; Fransson *et al.* 2005, 2006; Garzon & Roberts 2013). Meanwhile, we need to point out that TS waves are important basically in two dimensional (2D) subsonic boundary-layers on flat or convex surfaces, while in many other cases, other instabilities dominate and are being extensively investigated. In contrast to the 2D case, the 3D boundary layer exhibits both streamwise and crossflow components. The study of the flow stability in boundary layers with transverse pressure gradients is traced back to the experiments of Gray (1952). An early review work on crossflow is attributed to Reed (1989) and a more recent review on crossflow instability was made by Saric (2003). In 2D boundary layer flows over concave walls, Görtler vortices are thought to be the cause of transition (Saric 1994). In order to improve the understanding of the underpinning role of TS waves, we chose to focus our attention on their effect by leveraging the fact that DNS investigation allows us to neglect other forms of perturbations. Therefore this case is not intended to be fully representative of the richer transition scenario on an actual aircraft wing cruising in a natural environment.

Receptivity is the initial stage of the uncontrolled ("natural") transition process, first highlighted by Morkovin (1969a), where environmental disturbances, such as acoustic waves or vorticity, are transformed into smaller scale perturbations within the boundary layer (Morkovin 1969). For uncontrolled transition processes, initially these disturbances may be too small to measure, which are observed only after the onset of an instability and the nature of the basic state and the growth (or decay) of these disturbances depends on the nature of the disturbance (Saric 2002). The aim of receptivity studies is to assess the initial condition of the disturbance amplitude, frequency, and phase within the boundary (Morkovin 1969, Saric 2002). So far, only a small part of various possible receptivity mechanisms have been or are investigated for the cases of either: (i) direct excitation of stationary instability modes (such as crossflow or Görtler modes) by stationary surface roughness or (ii) transformation of various unsteady external disturbances (such as various freestream vortices, acoustic waves, etc.) on various 2D and 3D streamwise-localized surface roughness elements, resulting in excitation of various 2D and 3D non-stationary instability modes (such as TS modes, Crossflow modes, Görtler modes, etc.) ((Gaster 1965; Murdock 1980; Goldstein 1983; Ruban 1984; Goldstein 1985; Goldstein & Hultgren 1987; Kerschen 1989, 1990; Hall 1990; Denier *et al.* 1991; Saric 1994; Choudhari 1994; Bassom & Hall 1994; Bassom & Seddougui 1995; Duck *et al.* 1996; Dietz 1999; Wu 2001b; Saric *et al.* 2002; Templemann 2011). The receptivity mechanism shows that the deviation on the length scale of eigenmodes from a smooth surface can excite TS waves by interacting with free-stream disturbances or acoustic noise. Kachanov (1979a, b) first performed the quantitative experimental study of the boundary layer receptivity to unsteady freestream vortices for the case of a 2D problem with the transverse orientation of the disturbance vorticity vector. The result of Kachanov (1979a, b) was consistent with the theoretical study by Rogler & Reshotko (1975). Considering steady vortices, Kendall (1985, 1990, and 1991) obtained the first qualitative data, which was compared with numerical results generated by Bertolotti (1996, 2003).

From a theoretical point of view, Ruban (1984); Goldstein (1985); Goldstein & Hultgren (1987); Duck *et al.* (1996) studied the interactions of free-stream disturbances with an isolated steady hump within the viscous sublayer of a triple-deck region. As indicated by Borodulin *et al.* (2013), almost all investigations related to unsteady vortex receptivity of boundary layers performed after the early experiments were theoretical ones until the end of the 1990s. For distributed roughness receptivity, considering a weak waviness, Zavol'skii *et al.* (1983) theoretically investigated the problem of resonant scattering of a periodical vortex street on a wall based on the framework of a locally parallel theory. Subsequently, the theoretical approach was developed by Choudhari & Streett (1992) and Crouch (1994) for localised and distributed vortex receptivity. Based on asymptotic theory, Goldstein (1983, 1985), Ruban (1985) and Wu (2001a) carried out the studies for acoustic receptivity and Kerschen (1990), Goldstein & Leib (1993), Choudhari (1994) and Wu (2001a,b) for localised and distributed boundary layer receptivity. A detailed review work was done in the introduction of Borodulin *et al.* (2013).

However, theoretical studies of the interaction between instability modes and a distorted base flow have received less attention. For distributed roughness, Corke *et al.* (1986) further inferred that the faster growth of TS waves on the rough wall was not attributable to the destabilization effect of roughness, such as an inflectional instability, but claimed that the growth was due to the continual excitation of TS waves on rough wall by free-stream turbulence. More recently, the important theoretical work on the interaction of isolated roughness with either acoustic or vortical freestream disturbances was investigated by Wu & Hogg (2006). Brehm *et al.* (2011) investigated the impact of 2D distributed roughness on the laminar-turbulent transition process and found that the roughness spacing has a drastic effect on the growth of disturbances. Borodulin *et al.* (2013) discussed the influence of distributed mechanisms on amplification of instability modes. As indicated by Brehm *et al.* (2011), for isolated roughness some basic understanding of the physical mechanisms promoting transition has been obtained, but the relevant physical mechanisms driving the transition process in the presence of distributed roughness are not well understood.

We investigated the effect of a smooth forward facing step on the growth properties of TS wave excited by forcing the boundary layer at different unstable non-dimensional frequencies. The amplitude of the forcing was chosen such that the velocity profiles of the resulting TS waves are well resolved but weak enough that no secondary instabilities are introduced. For the domain of the flat plate considered in the test cases presented here, the unstable frequencies span $F \in [27,250]$ for displacement thickness Reynolds number $Re_{\delta*} \in [320,1500]$ ($Re_{\delta*} = U_\infty\delta*/\nu$, where $U_\infty$ and $\nu$ denote stream-wise freestream velocity magnitude and kinematic viscosity, respectively and $\delta*$ denotes the displacement thickness). We denote frequencies as high for $F \in [100,250]$. These high-frequencies are of particular interest because they can lead to transition towards the leading edge of the flat plate (Downs & Fransson 2014). Note, the difference between the smooth step considered in this paper and a traditional sharp step is that the geometry for a smooth step is described by no less than two parameters (height and width) whereas for a traditional sharp step only one parameter (height) is required. Nenni & Gluyas (1966) first explicitly gave a critical height for sharp forward-facing steps corresponding to a Reynolds number, defined according to the step height H, of $Re_{H,\text{ critical}} = U_\infty H_{\text{critical}}/\nu = 1800$ where $H_{\text{critical}}$ correlates to the measured onset of transition such that the transition location first begins to move upstream as H increases above the critical value $H_{\text{critical}}$ and below $H_{\text{critical}}$, the transition location is generally unaffected by the presence of the step. $Re_{H,\text{ critical}}$ is only a rough number without considering variation of the streamwise location or pressure gradient.

As discussed by Edelmann & Rist (2015), the research on the influence of steps on the stability of the boundary layer can be divided into two approaches: one focuses on finding a critical step height $Re_H$, critical (Nenni & Gluyas 1966) whereas the other is based on the idea that the effect of a protuberance can be incorporated in the eN method (Perraud *et al.* 2004; Wang & Gaster 2005; Crouch *et al.* 2006; Edelmann & Rist 2013, 2015). It is worth mentioning that Wu & Hogg (2006) showed that as the TS wave propagates through and is scattered by the mean-flow distortion induced by the roughness, it acquires a different amplitude downstream. They introduced the concept of a transmission coefficient. A further numerical study by Xu *et al.* (2016) confirms the localised isolated roughness has a local stabilising effect but overall a destabilising effect. Additionally an alternate expression of the transmission coefficient is introduced which can be incorporated into the $e^N$ method.

Recently, based on the second approach, Edelmann & Rist (2015) found that generally, for transonic flows, sharp forward-facing steps led to an enhanced amplification of disturbances. They also found sub- and super-sonic results showed significant differences in the generation mechanism of the separation bubbles. A different phenomenon was found for incompressible flows when investigated numerically, by using an immersed boundary technique (Wörner *et al.* 2003). The authors observed that for a non-dimensional frequency $F = 49.34$, the amplitude of the TS wave is reduced throughout the domain considered by the forward-facing step. They attribute this stabilising effect to the thinner boundary layer evolving on the step in comparison to the boundary layer without a step. They also claimed that when a small separation zone appears in front of the step it has no influence on the TS wave.

The presence of separation bubbles gives rise to a destabilising effect on a boundary layer. Generally, the separated shear layer will undergo rapid transition to turbulence and, even at rather small Reynolds numbers, separation provokes an increase in velocity perturbations and laminar flow breakdown, taking place in the separation region or close to it. The first observation of laminar separation bubbles were undertaken by Jones (1938) and the structure of a time-averaged bubble was given by Horton (1968) and the interested reader can find a detailed review of the experimental work on the subject in Young & Horton (1966). Hammond & Redekopp (1998) found that a separation bubble could become absolutely unstable for peak reversed flow velocity in excess of 30% of the free-stream velocity. Theofilis (2000) subsequently reported on the shape of the globally unstable mode in recirculation bubble. A separation bubble can have important impact on the global stability of a boundary layer. In the following, we shall only focus on amplification of the TS wave by a separation bubble. Numerically, with laminar separation bubbles, Rist (1993) suggested a three-dimensional oblique mode breakdown rather than a secondary instability of finite-amplitude 2D waves. Xu *et al.* (2016) investigated the behaviour of TS waves undergoing small-scale localised distortions and found even a small separation bubble can amplify a TS wave. When a sharp forward-facing step of sufficient height is present in a boundary layer, a separation bubble can easily be generated. In particular, the effective transformation or scattering of the freestream disturbances to the TS waves occurs preferably alongside sudden changes of the mean flow (e.g. over the leading edge, separation region or suction slits). The external acoustics, surface vibrations and vortical disturbances in the form of localised flow modulations or freestream turbulence are those which most frequently contribute to the boundary layer receptivity as reviewed by Nishioka & Morkovin (1986); Kozlov & Ryzhov (1990); Saric (1990); Bippes (1999). Additionally, a smooth step is less receptive than a sharp step (Kachanov *et al.* 1979a). Another benefit of using a smooth step is to circumvent biglobal instability (Hammond & Redekopp 1998).

*Problem Definition*

Referring now to **FIG. 2,** at Streamwise (top) and wall-normal (bottom) velocity profiles (around the step located at X=0) for three different streamwise locations of the flat plate are illustrated: (a,d) $Re_{\delta}*$=821 at X=-20.87, (b,e)) $Re_{\delta}*$=866 at X=0 and (c,f) $Re_{\delta}*$=897 at X=15.11. The physical parameters for each case are given for reference in case D of Table 2.
An overview is provided of the computational setup with the Blasius boundary layer profile at the inflow and the disturbance position. The smooth step considered in this paper is located in the unstable regime of the neutral stability curve close to the leading edge. In the following study, we considers medium and frequencies F $\in$ {100,140,150,160} 2D TS waves but also investigate a low frequency case with forcing F = 49.34 for comparison with Wörner *et al.* (2003). The low frequency forcing is particularly interesting because it offers, in the context of the neutral stability curve of the zero pressure gradient flat plate, a much larger unstable regime compatible with the so called critical amplification factor N = 8 (Edelmann & Rist 2015). Recently, Downs & Fransson (2014) studied TS wave growth over transversely-periodic surface patterns excited at F $\in$ {100, 110, 120, 130}. They report that TS waves excited by high frequencies and large amplitudes ($A^{int,l}$ < 0.48%Uoo), producing well resolved profiles without triggering secondary instabilities, can be reduced by transversely-periodic surface patterns compared to the flat plate case. Therefore, over a smooth step, understanding growth properties of the TS waves with high frequencies is also likely to be pertinent. The linear analysis shows that in the presence of a single smooth step, the TS wave can be attenuated for steps below a critical height and smoothness but amplified above this critical height. Further, the linear stability investigation of two separated smooth steps, instead of a single step, with the same geometrical configuration revealed further reduction of the amplitude of the TS wave can be obtained compared to a single smooth step. Again, past a critical height, two forward facing smooth steps can have a destabilizing effect on the 2D TS mode. Furthermore, a smooth step can tolerate a greater height scale compared with a sharp step and does not introduce separation bubbles. In order to validate the stabilising effect of the smooth forward facing steps seen in the linear stability analysis, fully non-linear direct numerical simulations of both the K- and H-type transition scenarios are conducted. These two transition scenarios are insightful because they exhibit a long region of linear growth particularly suitable for the investigation of the effect of the forward facing smooth step in the boundary layer on the TS wave (Sayadi *et al.* 2013). The results from the direct numerical simulation confirm the findings from the linear analysis. For both K- and H-type transition scenarios the forward facing smooth steps configuration has a stabilising effect even avoiding transition for the K-type scenario. Further, by introducing Gaussian white noise with both fixed and random phase shift into DNS, robustness of the strategy is demonstrated.

**Mathematical formulations and numerical approach**

*Fully nonlinear and linearized Navier-Stokes equations*

The non-dimensional momentum and continuity equations governing unsteady viscous flow with constant density are given as follows:

$$\partial_t u_i - Re^{-1}\partial_j^2 u_i + u_j\partial_j u_i + \partial_i p = 0,$$
$$\partial_j u_j = 0, \qquad (2.1)$$

where ui is one component of velocity field along the ith direction, $\partial_t$ denotes the derivative with respect to time, $\partial_j$ is the jth direction spatial derivative , *Re* is the Reynolds number defined by $LU_{\infty}/v$ where L is the distance from the leading edge, v is the kinematic viscosity and p is the pressure. For a 2D problem, i = 1,2 and $(u_1,u_2)$ = (u,v) and for a 3D problem, i = 1,2,3 and $(u_1,u_2,u_3)$ = (u,v,w).
Considering a steady state $\bar{u}_i$ of (2.1) about which a small perturbation $\tilde{u}_i$, such that u$_i$=$\bar{u}_i$+$\tilde{u}_i$ and dropping the second order terms in $\tilde{u}_i$, (2.1) can be linearized as follows

$$\partial_t \tilde{u}_i - Re^{-1}\partial_j^2 \tilde{u}_i + \bar{u}_j\partial_j\tilde{u}_i + \tilde{u}_j\partial_j\bar{u}_i + \partial_i\tilde{p} = 0,$$
$$\partial_j\tilde{u}_j = 0. \qquad (2.2)$$

With suitable boundary conditions, in a linear regime, the system (2.2) can be used to exactly simulate evolution of a small perturbation $\tilde{u}_i$ in a boundary layer.

In the flat-plate simulations undertaken, with the assumptions of relatively large Re and no pressure gradient, the base flow can be approximated by the well-known Blasius equation

$$f'''(\eta) + \frac{1}{2}f(\eta)f''(\eta) = 0, \qquad (2.3)$$

subject to the following boundary conditions

$$f(\eta) = f'(\eta) = 0 \text{ at } \eta = 0, f' = 1 \text{ at } \eta \to \infty, \qquad (2.4)$$

where the prime denotes the derivative with respect to the similarity variable $\eta$. Specifically in the above, the dimensionless variables are defined by

$$f = \Psi/\sqrt{\nu U_\infty x} \text{ and } \eta = y\sqrt{U_\infty/(\nu x)}, \qquad (2.5)$$

where $\Psi$ is the stream function. The streamwise and vertical velocity profiles of the Blasius boundary layer can be calculated by

$$\bar{u}_B = U_\infty f'(\eta) \text{ and } \bar{v}_B = \frac{1}{2}\sqrt{\frac{\nu U_\infty}{x}}(\eta f'(\eta) - f(\eta)). \qquad (2.6)$$

Under the assumption of streamwise parallel flow in two dimensions, the perturbation assumes the normal form

$$(\tilde{u}, \tilde{v}, \tilde{p}) = (\hat{u}, \hat{v}, \hat{p})\exp(i(\alpha x - \omega t)) + c.c., \qquad (2.7)$$

where $\alpha$ and $\omega$ denote wave-number and frequency of a perturbation, respectively. The mode $(\hat{u}, \hat{v}, \hat{p})$ in (2.7) generally can be obtained by solving the well-known Orr-Sommerfeld (O-S) equation, the solution of which for eigenvalues and eigenfunctions has been well studied (Stuart 1963; Schlichting & Gersten 1968; Drazin & Reid 1981). When temporal stability is studied, the perturbation (2.7) can be obtained by solving O-S equation with the imposed condition that $\alpha$ is real, and then the complex speed $\omega/\alpha$ is calculated; when spatial stability is studied, the condition of real frequency $\omega$ is imposed and the wave numbers are calculated. For the spatial stability, by integrating the spatial growth rate $-\Im(\alpha)$ of convective perturbations, amplification of their amplitude can be obtained along streamwise direction. When a surface imperfection occurs, the same notations $\hat{u}$ and $\hat{v}$ are used to denote the TS mode.

Generally, for numerical solutions of the linearized Navier-Stokes equations, considering the spatial convective instability and the perturbation (2.7) propagates along positive $x$ direction, the frequency is real $(\omega \in \mathbb{R}^+)$. Assuming that the TS mode is dependent on both $x$ and y, the TS wave envelope is defined by the absolute maximum amplitude of the TS wave as follows

$$A(x) = \max\left\{|\tilde{u}(x, \eta, t)| : \forall \eta \in [0, \infty), \forall t \in \mathbb{R}^+\right\}. \qquad (2.8)$$

*Definitions correlated with a surface imperfection*

In order to rescale the step, we introduce a reference boundary layer thickness $\delta_{99}=4.91x_c Re_{xc}^{-1/2}$ and displacement thickness scales $\delta^*|_{xc}=1.7208x_c Re_{xc}^{-1/2}$, defined according to a flat plate boundary layer, where $x_c$ is the distance from the leading edge to the center position of a surface imperfection and $Re_{xc}=U_\infty x_c/\nu$. We also let $Re_{\delta}*=U_\infty\delta^*/\nu$

be the displacement Reynolds number. Now, we consider a forward-step-like surface imperfection, which is defined by

$$f_s(X, \hat{h}) = \frac{\hat{h}}{2} \cdot \left(1 + \operatorname{erf}\left(\frac{X}{\sqrt{2}\hat{d}}\right)\right) \qquad (2.9)$$

where $\hat{d}$ and $\hat{h}$ (>0) are the streamwise width scale and the normal direction length scale defined by the corresponding physical scales $d$ and $h$ as

$$\hat{h} = h/\delta_{99}, \hat{d} = d/\delta_{99}, \qquad (2.10)$$

and $X$ is a streamwise local coordinate defined as follows

$$X = (x - x_c)/\delta_{99}. \qquad (2.11)$$

For multiple smooth steps, the wall profile is formally defined by

$$\sum_{i=0}^{n} f_s(X - X_i, \hat{h}), \qquad (2.12)$$

where $X_i$ denotes the relative position of each individual step with respect to the first step located at $X_0=0$ and *n+1* is the number of steps.

In order to characterize or quantify geometrical steepness of a continuous function *f(x)*, assuming that f(x)∈$C^1$, we introduce the following quantity

$$\gamma(x) = \frac{\max|\partial_x f(x)|}{\sqrt{\max|\partial_x f(x)|^2 + \varepsilon^{-2}}}, \qquad (2.13)$$

where $\varepsilon$ is a smooth parameter. It is clear that $\gamma \in [0,1)$.

For a smooth step, $\varepsilon$ is defined by the ratio $\hat{h}/\hat{d}$=h/d ∈ [0, ∞) and the formula (2.13) can be interpreted in the following limits:

$$\gamma(X) = \left\{ \begin{array}{ll} 1, & \hat{h}/\hat{d} \to \infty \text{ for } \hat{h} \neq 0 \\ 0, & \hat{h}/\hat{d} \to 0 \end{array} \right. , \text{ for } f(X) = f_s(X, \hat{h}), X \in [-\hat{d}/2, \hat{d}/2]. \qquad (2.14)$$

When $\gamma$=1 the step is sharp whereas for $\gamma$=0 the smooth step tends to a flat plate.

*Numerical strategy*

A spectral/*hp* element discretization, implemented in the Nektar++ package (Cantwell *et al.* 2015) is used in this work to solve the linear as well as nonlinear Navier-Stokes equations. A stiffly stable splitting scheme is adopted which decouples the velocity and pressure fields and time integration is achieved by a second-order accurate implicit-explicit scheme (Karniadakis *et al.* 1991).

For 2D simulations, a convergence study by *p-type* refinement is performed to demonstrate resolution independence. For 3D calculations, the same 2D mesh in the *x-y* plane is used with the addition of a hybrid Fourier-Spectral/*hp* discretization in the third direction yielding a hybrid Fourier/spectral/*hp* discretization of the full 3D incompressible Navier-Stokes equations.

To obtain the best fidelity in representing the curved surface of the smooth step, high- order curved elements are defined by means of an analytical mapping. The governing equations are then discretized in each curved element by seventh-order polynomials. The choice of polynomial order is guaranteed by the mesh independence study.

Referring again to **FIG. 2,** a comparison of the horizontal and vertical velocity profiles over a smooth step are given at different positions for polynomial order ranging from six to eight. In the whole domain, the $L^2$ relative error of velocity fields is lower than $10^{-6}$, which is consistent with the convergence tolerance of the base flow generation defined by

$$\left\|(\partial_t^d u, \partial_t^d v)\right\|_0 / \left\|(u, v)\right\|_0 \cdot T_c < 10^{-6},$$

Where $\|.\|_0$ means the standard $L^2$ norm, $\partial_t^d$ denotes the discrete temporal derivative and $T_c$ is the convective time scale based on the free stream velocity and a unit length. Once 2D steady base flows are generated by using the non-linear Navier-Stokes equations (NSEs), the TS waves are simulated by the linearized Navier-Stokes equations (LNSEs). As discussed below, for base flow generation, the inlet position is located sufficiently far from the first step to allow the base flows to recover the Blasius profile. Following the experimental methodology used by Downs & Fransson (2014), the TS waves are excited by periodic suction and blowing on wall.

**2D linear-stability problem**

*Linear analysis in a narrow unstable regime of the neutral stability curve*

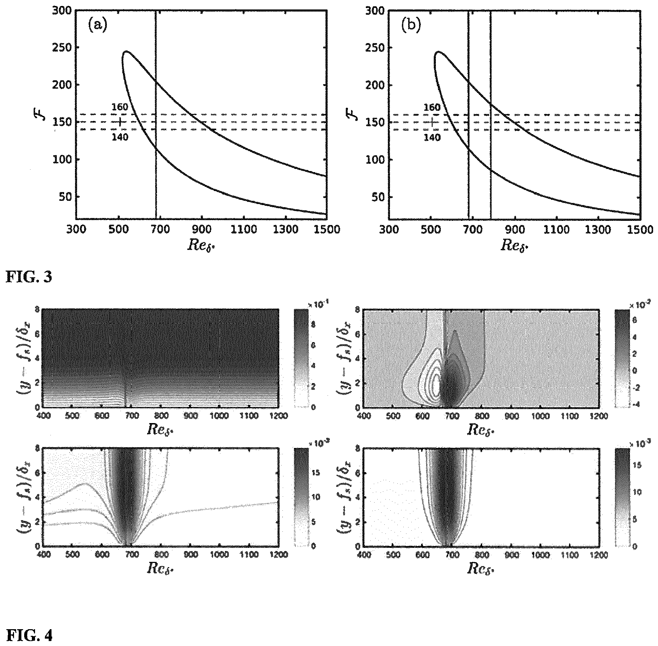

As already mentioned, in order to detect the effect of smooth steps on the 2D stability of the boundary layer, three different frequency perturbations F ($\in\{140, 150\ 160\}$) are excited within the boundary, up-stream of the unstable region, by transversely-uniform periodic blowing and suction (see **FIG. 3**). Positions of exciters (+) as well as (a) the location of an isolated smooth steps and (b) the location of two smooth steps in terms of the flat plate neutral stability curve. The three different excitation frequencies of the TS wave, based on the step location, are also shown by horizontal dashed lines. **FIG. 4** illustrates changes in the velocity fields with respect to the Blasius boundary layer profile for a step height $\hat{h} = 30\%$: $u/U_\infty$ in the top-left, $u/U_\infty - \overline{u}_B$ in the top-right, $v/U_\infty$ in the bottom left, and, $v/U_\infty - \overline{v}_B$ in the bottom-right. The vertical line at $Re_{\delta^*}=680$ is the location of the step. As an example, we show changes of the base flow for Case D ($\hat{h} = 30\%$) in Table 1 and the contour plots of $u/U_\infty$, $u/U_\infty - \overline{u}_B$, $v/U_\infty$ and $v/U_\infty - \overline{v}_B$ are given in **FIG. 4**. We observe that with the presence of the smooth step, the contour lines of $u/U_\infty$ and $v/U_\infty$ are altered in the following manner.

| Case | $Re_{\delta_i^*}$ | $Re_{\delta_{c_1}^*}$ | $Re_{\delta_{c_2}^*}$ | $\mathcal{F}_1$ | $\mathcal{F}_2$ | $\mathcal{F}_3$ | $\hat{h}(\%)$ | $d$ | $\gamma \times 10^4$ | $L_x/\delta_{99}$ | $L_y/\delta_{99}$ |
|---|---|---|---|---|---|---|---|---|---|---|---|
| A | 320 | 680 | 786 | 140 | 150 | 160 | 5.48 | 4 | 0.74 | 250 | 30 |
| B | - | - | - | - | - | - | 10.96 | - | 2.99 | - | - |
| C | - | - | - | - | - | - | 20.00 | - | 9.97 | - | - |
| D | - | - | - | - | - | - | 30.00 | - | 22.44 | - | - |

TABLE 1. Parameters for smooth steps where $Re_{\delta_i^*}$, $Re_{\delta_{c_1}^*}$ and $Re_{\delta_{c_2}^*}$ are, respectively, the inlet Reynolds number, the Reynolds number at the centre of the first step and the Reynolds number at the centre of the second step. $F$ denotes the non-dimensional perturbation frequency. $L_x$ and $L_{\prime\prime}$ denote streamwise extent and height of the domain for which the 2D base flow field obtained was independent of domain size.

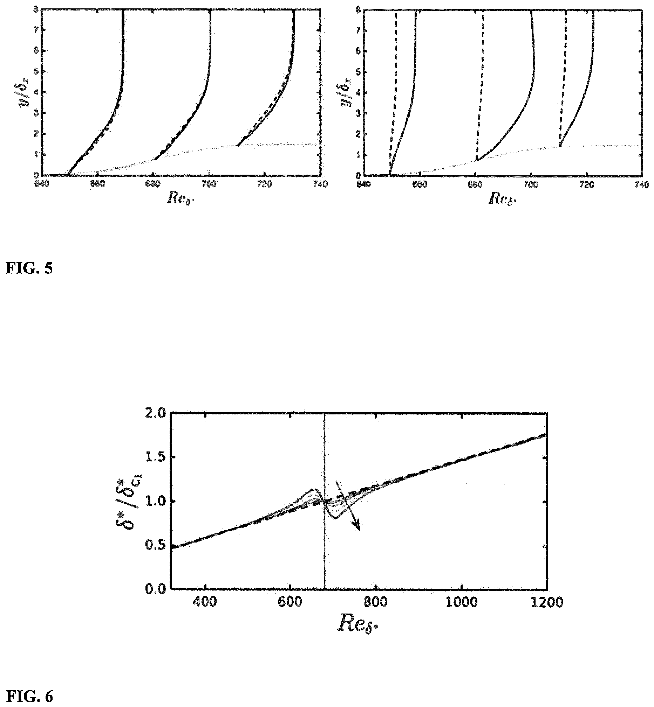

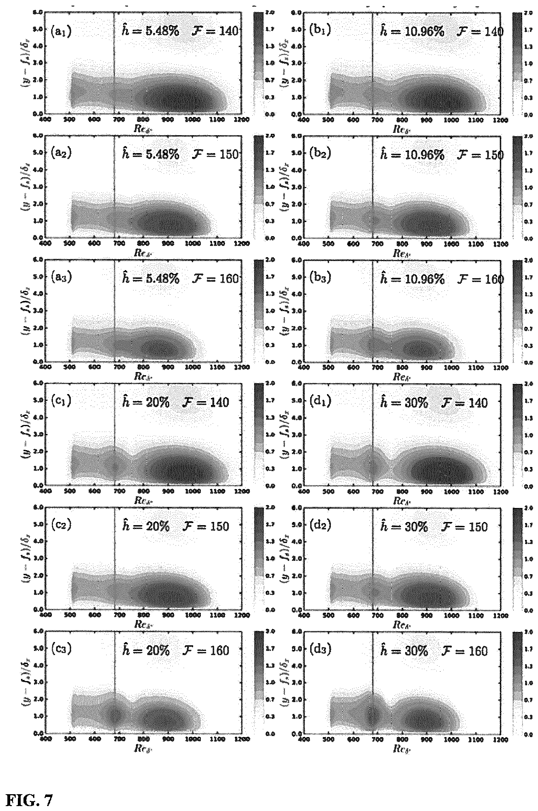

The streamwise velocity slightly deceases in front of the step and slightly increases over the step while the vertical velocity is only increased around the step. **FIG. 5** illustrates a comparison of the base flow profiles of the boundary layers over the flat plate (dotted lines) and a smooth forward facing smooth step (solid lines). Streamwise velocity profiles $u/U_\infty$ and $\overline{u}_B$ are shown on the left and vertical velocity profiles $v/U_\infty$ and $\overline{v}_B$ are shown on the right. In **FIG. 5,** as a further comparison, we show the horizontal and vertical velocity profiles at the three different positions. **FIG. 6** illustrate further a displacement thickness $\delta^*$ scaled by $\delta_{c1}^*$. The vertical grey line represents the location of the forward facing smooth step and the arrow indicates $\hat{h}$ is increasing. The solid colored lines correspond to cases A, B, C and D in Table 1 and the dashed dark line the flat plate without a forward facing smooth step. Moreover, **FIG. 6** shows that $\delta^*$ increases in front of the step and decreases over the step. We observe that when the TS wave propagates over a smooth step, the amplitude of the TS wave is generally amplified in front of the step and attenuated over the step. The following linear analysis is used to elucidate this phenomenon. Hereafter, for each perturbation frequency studied, let Ao indicate a reference maximum TS mode amplitude at the lower branch of the neutral stability curve in a flat plate boundary layer. **FIG. 7** illustrates a contour plot of $|\tilde{u}|/A_0$ for steps of different heights h=5.48% in (a1,a2,a3), $\hat{h}$=10.96% in (b1,b2,b3), h=20% in (c1,c2,c3) and h=30% in (d1,d2,d3) and exposed to TS waves of non-dimensional frequencies ranging from $F \in \{140,150,160\}$. The vertical line indicates the location of the smooth forward facing step on the flat plate and the "+" the location of the maximum amplitude of the TS wave. In **FIG. 7**, the contours of $\tilde{u}/A_0$ are given for the three different non-dimensional frequencies ($F \in \{140,150,160\}$) and for four different single smooth steps of varying heights $\hat{h}$=5.45%, 10.96%, 20% and 30% all located in $Re_{\delta*c1}$=680. A summary of the parameters of these computations can be found in Table 1.

First, we observe that around the smooth step, the TS mode is energized and subsequently weakened **(FIG. 7** (a1-d3)). By *energizing* we mean that around the step, there exists a local maximum of $|\tilde{u}|/A_0$. Secondly, a higher step height $\hat{h}$ gives a stronger local maximum. Finally, increasing the height of the step moves the location of maximum amplitude of the TS mode downstream. For example for the excitation frequency of *F=150* the maximum is located at $Re_{\delta*}$=920 for $\hat{h}$=5.48% (figure 7(a2)) but at $Re_{\delta*}$=950 for $\hat{h}$=30% (figure 7(d2)).

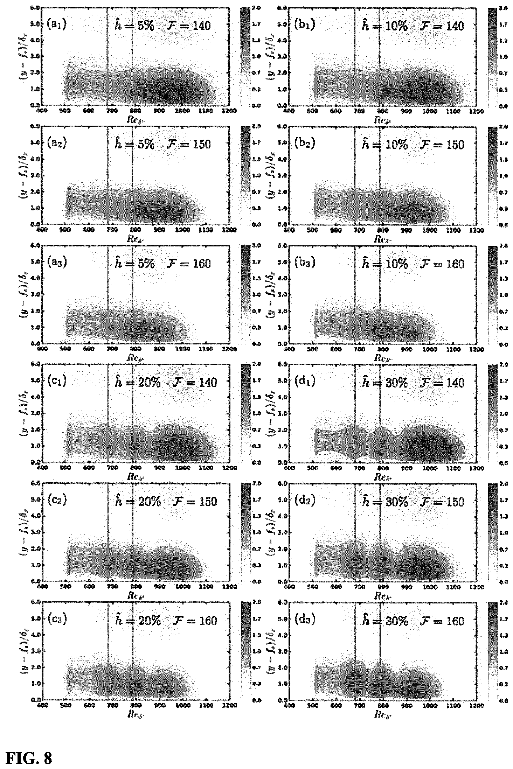

The result of our linear analysis reveal distinct behavior from the results for a sharp step ($\gamma$=1) of height h/$\delta$*=0.235 ($\hat{h}$=8.24%) given by Wörner *et al.* (2003) where they claim that a forward facing sharp step showed a stabilizing effect without a local destabilization regime despite a separation bubble being reported in front of the step. Recently, through further numerical calculations, Edelmann & Rist (2015) observed that, for subsonic Mach numbers and larger height h/$\delta$*=0.94 (h=33%), two separation bubbles, in front and on top of the step, were observed and strong amplification of the disturbances was found in front of and behind the step. The results from the linear analysis and, more generally the results from the DNS presented in \S 4, underline the attractiveness of replacing a forward facing sharp step ($\gamma$=1) with large *h* by a smooth one $\gamma$<1 because the smooth step with the same *h* does not lead to a separation bubble. We attribute the discrepancy between the current findings and the work of Edelmann & Rist (2015) to the step-induced separation bubble that has strong destabilizing effect on the TS mode. Referring again to **FIG. 7,** furthermore, for a forward-facing smooth step of fixed height, the position of global maximum value of a contour varies with respect to the given frequency, which is consistent with the relative position of the step with respect to the position of the upper branch when changing frequency in the neutral curve diagram (Fig. 7(c1-c3) for example). For two isolated smooth steps, a similar phenomenon is observed in figure 8 (c1-c3) except that two distinct local maxima are observed around each smooth step for large $\hat{h}$. Referring now to **FIGs. 7** and **8,** it can be concluded that both for single- and two-step configuration global maximum values of $|\tilde{u}|/A_0$ depended on frequencies, $\hat{h}$ and smoothness. **FIG. 8** illustrates a contour plot of $|\tilde{u}|/A_0$ for steps of different heights $\hat{h}$=5.48% in (a1,a2,a3), $\hat{h}$=10.96% in (b1,b2,b3), $\hat{h}$=20% in (c1,c2,c3) and h=30% in (d1,d2,d3) and exposed to TS waves of non-dimensional frequencies ranging from $F \in \{140,150,160\}$. The vertical lines indicate the location of the two smooth forward facing step on the flat plate and the "+" the location of the maximum amplitude of the TS wave.

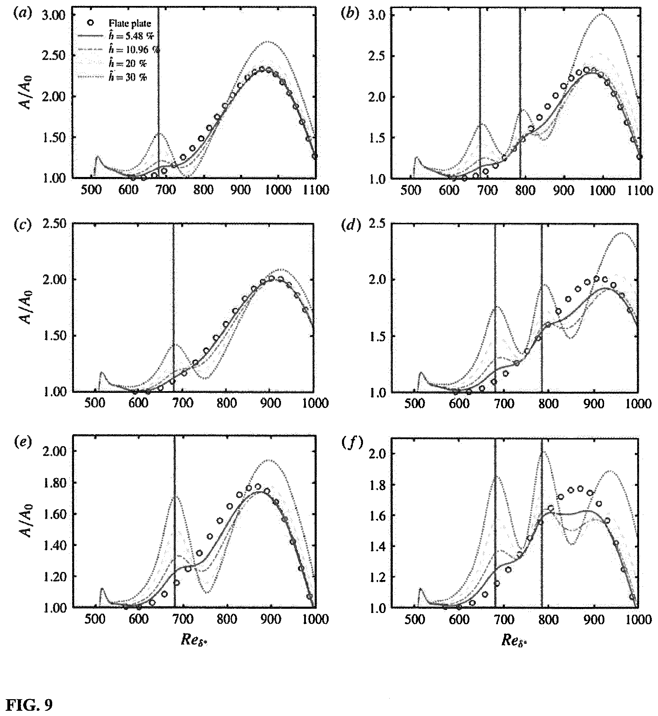

Referring now to **FIG. 9,** a relative amplitude of the TS-waves $A/A_0$ is illustrated as a function of streamwise location for each of the step heights $\hat{h}$=5.48%, $\hat{h}$=10.96%, $\hat{h}$=20% and $\hat{h}$=30% for a single step (a,c,e) and two steps (b,d,f) with TS mode frequencies of $F = 140$ in (a,b), $F = 150$ in (c,d) and $F = 160$ in (e,f). The vertical lines represent the location of the forward facing smooth steps. By extracting maximum values of the envelope of the TS mode at each streamwise location, the A/Ao profiles for both the single and double smooth steps cases are shown. We notice that a high enough smooth step significantly locally amplifies the TS wave in the vicinity of the step. From figure 9 ($a_1$-$a_3$), we observe that when $\hat{h}$<20%, the TS waves are stabilized downstream for small $\hat{h}$. However when h>20%, the most amplified flat plate TS modes corresponds to the lowest frequency F=140. The reason for this may well lie in that for this fixed step position, this lower frequency has a higher instability even for the flat plate cases which are indicated by the open circles in this figure. Obviously from this figure we also observe that larger step heights have an influence on the $Re_{\delta*}$ for which instability starts and the rate at with the TS waves grow in the single step case shown in figure 9($a_1$-$a_3$).

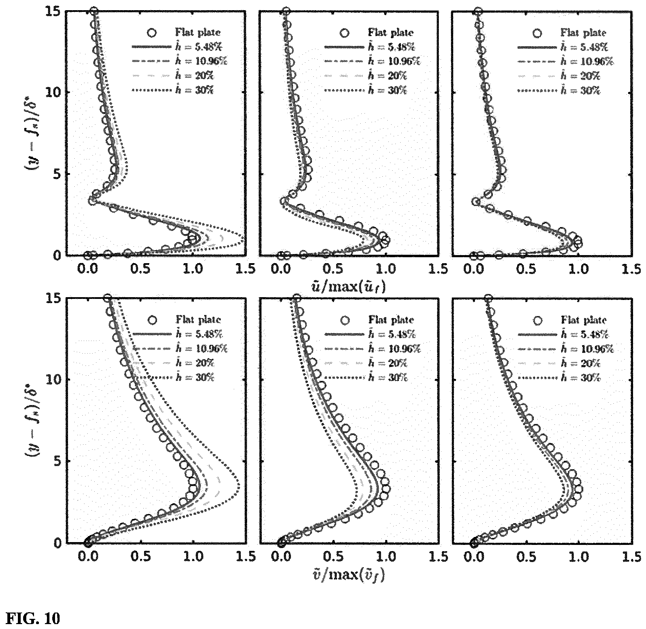

**FIG. 10** illustrates a comparison of $\tilde{u}$/max ($\tilde{u}_f$) (top) and $\tilde{v}$/max ($\tilde{v}_f$) (bottom) profiles of the TS modes at different locations over a single smooth forwards facing smooth step at $F = 150$ for $Re_{\delta*}$=680 (left), $Re_{\delta*}$=750 (middle) and $Re_{\delta*}$=800 (right). Here, a comparison of the TS modes at sections before the step, in the middle of the step and after the step are shown, for F = 150, to help elucidate the stabilisation effect. From this figure we observe in figure 10(a) that before the step as h is increased the profiles have a similar pattern but are amplified. However at the centre of the step and after the step (figures 10(b,c)) the profiles again retain a similar pattern to the flat plate profiles but are less amplified. From figure 9(a1-a3), assuming the local growth (or destabilisation) of the TS wave does not trigger any nonlinear phenomena, a smooth step with of low height is not harmful for the TS wave with a slightly high frequency (140≤F≤160). In fact, to some extent, a boundary layer can benefit from a smooth step since the net instability can be reduced. In figure 9(b1-b3) envelopes of the TS waves over two isolated smooth steps at the same frequencies are shown. The position of the two smooth steps is provided in Table 1 and schematically illustrated in figure 3(b). For the frequencies considered, the second steps still lies in the unstable regime of the flat plate neutral stability curve. We observe that, surprisingly, the second steps does not locally lead to further amplification of the TS waves when, h<20%; in contrast, the amplitudes of the TS waves are further dampened compared to the amplitude of the TS waves over both the single step boundary layers and a flat plate boundary. Destabilisation of the TS mode is only introduced by the larger height steps.

From the results of the linear stability analysis presented above, we deduce that stabilisation or destabilisation behaviours of smooth steps strongly depends on the smoothness of the step as well as its height. For a suitable range of parameters the influence of smooth steps on a boundary layer can certainly lead to notable stabilisation. It is interesting to note that if the step was extremely smooth, a region of favourable pressure gradient would exist over the whole domain we have considered also leading to suppression of the 2D TS-instability. However, in our study we obviously investigated the influence of a localised favourable pressure gradient introduced by a smooth forward facing step of length scale comparable to the TS wavelength which potentially has more practical applications.

*Linear analysis of smooth steps at lower excitation frequencies of F=100*

In the previous section, the investigations of the effect of a smooth forward facing step on the 2D stability of a boundary layer focused on the frequencies $F \in \{140, 150, 160\}$. The flat plate unstable regions corresponding to these frequencies are relatively narrow compared with lower frequencies (see figure 3. For example for F = 160 the unstable region of the TS-mode on the flat plate ranges from $Re_{\delta*}$ = 580 to $Re_{\delta*}$ = 830, whereas for a perturbation frequency of F = 100 the unstable region ranges from $Re_{\delta*}$ = 700 to $Re_{\delta*}$ = 1100. We therefore will now consider an incoming TS wave with a frequency F = 100 in a boundary layer over a single smooth step for the cases with the parameters given in Table 2. Physically, the size of steps at $Re_{\delta_*^{c\prime}}$ is kept the same as that of steps at $Re_{\delta_*^c}$ however we are now interested in assessing the effect of the position of the step on the excitation of the TS mode.

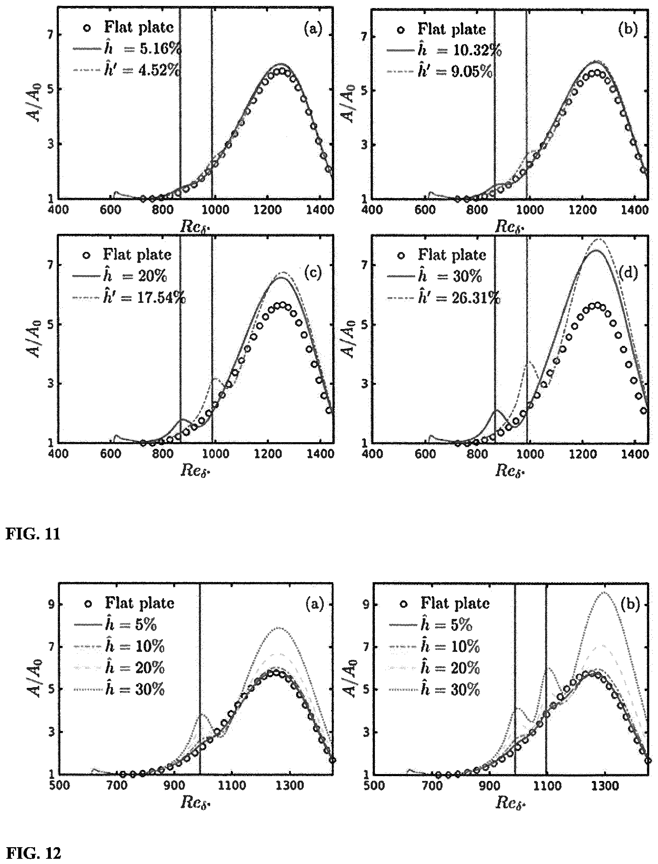

FIG. 11 illustrates a comparison of the normalized amplitude of the perturbation for steps at different locations the parameters of which can be found in Table 2. The red dotted line denotes a single step at $Re_{\delta_c^*}=866$ (left vertical line) and the blue solid line denotes a single step $Re_{\delta_{c\prime}^*}=988$. The comparison of the TS envelopes for different height steps for an isolated step in two different locations is provided. Clearly, figure 11(a) demonstrate again that small h (i.e. < 5%) does not induce significant destabilisation. However as $\hat{h}$ is increased as seen in figure 11(b)-(d), destabilisation effect emerges and larger h gives rise to larger global maximum amplitude of the TS wave. Meanwhile, figures 11(c)-(d) indicate that moving the location of the smooth step downstream, (yet not close to the neutral curve of the upper branch), induces a slightly stronger maximum amplification than for the more upstream location.

| Case | $Re_{\delta_i^*}$ | $Re_{\delta_c^*}$ | $\mathcal{F}$ | $h\%$ | $d$ | $\gamma \times 10^4$ | $L_x/\delta_{99}$ | $L_y/\delta_{99}$ |
|---|---|---|---|---|---|---|---|---|
| A | 388 | 866 | 100 | 5.16 | 4 | 0.66 | 287 | 30 |
| B | - | - | - | 10.32 | - | 2.65 | - | - |
| C | - | - | - | 20.00 | - | 9.97 | - | - |
| D | - | - | - | 30.00 | - | 22.44 | - | - |

| | $Re_{\delta_i^*}$ | $Re_{\delta_{c'}^*}$ | $\mathcal{F}$ | $\hat{h}'(= \hat{h}\delta_{99}^c/\delta_{99}^{c'})\%$ | $\hat{d}' = \hat{d}\delta_{99}^c/\delta_{99}^{c'}$ | $\gamma \times 10^4$ | $L_x/\delta_{99}$ | $L_y/\delta_{99}$ |
|---|---|---|---|---|---|---|---|---|
| A' | 388 | 988 | 100 | 4.52 | 3.51 | 0.66 | 287 | 30 |
| B' | - | - | - | 9.05 | - | 2.65 | - | - |
| C' | - | - | - | 17.54 | - | 9.97 | - | - |
| D' | - | - | - | 26.31 | - | 22.44 | - | - |

TABLE 2. Parameters for smooth steps: $Re_{\delta_i^*}$ is the inlet Reynolds number, $Re_{\delta_c^*}$ and $Re_{\delta_{c'}^*}$ indicate two different locations of a step of the same physical dimension. $\mathcal{F}$ denotes the non-dimensional perturbation frequency.

| Case | $Re_{\delta_i^*}$ | $Re_{\delta_{c_1}^*}$ | $Re_{\delta_{c_2}^*}$ | $\mathcal{F}$ | $h\%$ | $d$ | $\gamma \times 10^4$ | $L_x/\delta_{99}$ | $L_y/\delta_{99}$ |
|---|---|---|---|---|---|---|---|---|---|
| A | 388 | 988 | 1096 | 100 | 5.00 | 4 | 0.58 | 287 | 30 |
| B | - | - | - | - | 10.00 | - | 2.30 | - | - |
| C | - | - | - | - | 20.00 | - | 9.26 | - | - |
| D | - | - | - | - | 30.00 | - | 20.84 | - | - |

TABLE 3. Comparison of the normalised amplitude of the perturbation with parameters for smooth steps where $Re_{\delta_i^*}$, $Re_{\delta_{c_1}^*}$ and $Re_{\delta_{c_2}^*}$ are, respectively, the inlet Reynolds number, the Reynolds number at the centre of the first step and the Reynolds number at the centre of the second step. $\mathcal{F}$ denotes the non-dimensional perturbation frequency.

This means that for a low frequency TS wave, the smooth step can certainly have a destabilising role on the TS wave downstream of the step. As already mentioned when considering this type of lower frequency TS wave, the spatial extent of the unstable regime of the neutral stability curve is larger compared to that of a higher frequency wave. The localised stabilisation effect of the smooth step is then unable to generate a sufficiently large stabilising downstream influence that an amplification effect is eventually induced. Further the maximum values of the TS waves' envelops for the upstream case are less than that for downstream ones. This may well be expected since the TS wave has a low spatial growth rate when the wave is close to the lower branch of the neutral stability curve. In contrast, when the TS wave propagates towards the centre region of the unstable regime of the neutral stability curve, it has a larger spatial growth rate. In this study the upstream step, located at $Re_{\delta_*^c}$, is closer to the lower branch of the neutral stability curve compared with the step located at $Re_{\delta_*^{c\prime}}$ which is nearly at the central position of the unstable regime of the neutral stability curve. Therefore the destabilisation effect in front of the step at $Re_{\delta_*^{c\prime}}$ is to be expected to be greater than that in front of the step at $Re_{\delta_*^c}$. This is consistent with what we observe in TS waves' envelops of figure 11.

**FIG. 12** illustrates a comparison of the normalized amplitude of the perturbation for a low frequency $F = 100$ TS wave for a single step in $Re_{\delta_{c1}^*}$ (left) and two steps in $Re_{\delta_{c1}^*}$ and $Re_{\delta_{c2}^*}$ (right). The vertical lines represent the locations of the steps and the parameters of the setup are included in Table 3. This destabilisation phenomenon is further illustrated in for the parameters defined in Table 3 where we use the same non-dimensional value of $\hat{h}$ as in Table 2. When $\hat{h}=5\%$ and 10% once a second smooth step is introduced downstream, some stabilisation relative to the flat plate conditions is observed as shown in figure 12(b). The correlation between the position of the step and the TS mode amplification acts as a guideline for choosing the ideal location of a smooth step. For large $\hat{h}$, the effect of a step located in a larger growth rate region clearly gives rise to a larger amplification of the TS wave. However, it is worthy to note that when height is reduced to less than 10%, there no longer exists a strong destabilisation effect from a single smooth step, independent of the position within the unstable region which we have explored.

The correlation between the position of the step and the TS mode amplification acts as a guideline for choosing the ideal location of a smooth step. For large $\hat{h}$, the effect of a step located in a larger growth rate region clearly gives rise to a larger amplification of the TS wave. However, it is worthy to note that when height is reduced to less than 10%, there no longer exists a strong destabilisation effect from a single smooth step, independent of the position within the unstable region which we have explored.

*Ability of smooth steps to amplify the very low-frequency TS waves a F=42.*

The studies by Wörner *et al.* (2003); Edelmann & Rist (2015) considered the effect of low frequency TS modes for a long range from the leading edge of the flat plate with $Re_{\delta_*}$ =2200. In Edelmann & Rist (2015), the *N*-factor, defined as $N=\ln(A/A_0)$, got close to the transition criterion of $N=8$.

To further assess the effect of a forward facing smooth step on a similar problem we consider a TS wave with $F=42$. In addition we consider an upstream problem where the TS wave has been amplified by a recirculation bubble inside an indentation, located at $Re_{\delta_*}$=1519, far upstream of the transition location where N=8. We then introduce a smooth forward facing step downstream of the indentation in the unstable region of the TS mode. The indentation is defined by

$$f_r = \begin{cases} -\hat{h}_r \cdot \cos\left(\pi X^r/\hat{\lambda}\right)^3, & X^r \in [-\hat{\lambda}/2, \hat{\lambda}/2], \\ 0, & X^r \notin [-\hat{\lambda}/2, \hat{\lambda}/2], \end{cases} \qquad (3.1)$$

where $X^r = x - x_c^r / \delta_{99}^r$. The parameters of this computation are given in Table 4. Note that the width scale $\hat{\lambda}$ is comparable with the corresponding TS wavelength. A separation bubble is induced in the indentation region and when a base flow undergoes this distortion, the TS wave is strongly amplified.

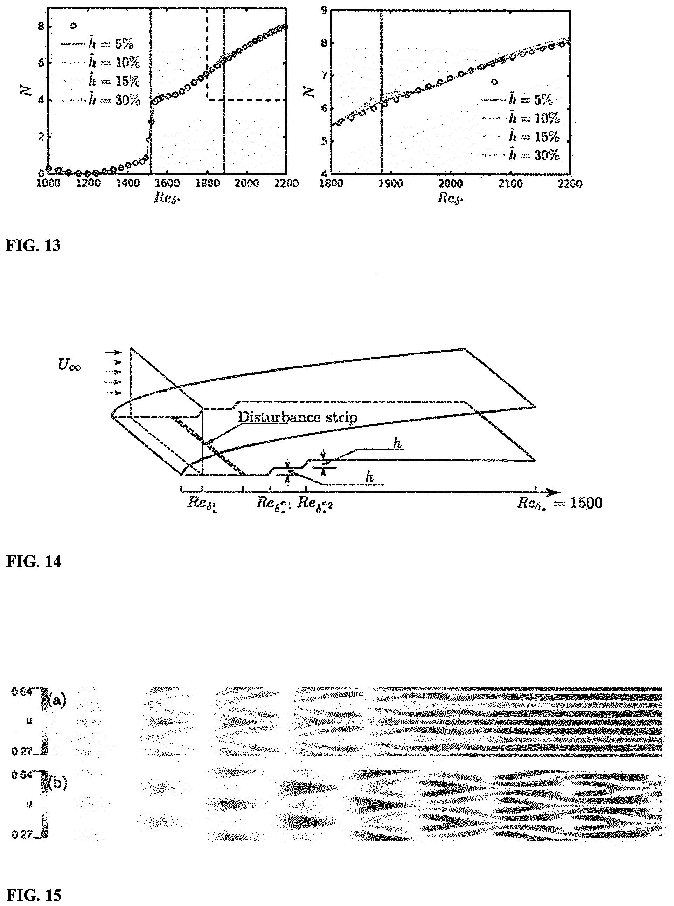

FIG. 13 illustrates an effect of a smooth step for the TS wave with a very low frequency $F = 42$ with $N = \ln(A/A_0)$. The disturbance is located at the first vertical line (left) and the smooth forward facing step at the second vertical line. On the right a local view of the TS wave envelope around the step and on the left a broader view. The parameters of the setup are given in Table 4. In **FIG. 13**, 13(Left), we observe that the TS waves are strongly amplified around the indentation and the N-factor in the computational domain reaches N=8. Downstream of the roughness, for $Re_{\delta_*} >1800$, the smooth forward facing step only has weak, local, stabilizing or destabilizing effect for all four cases (see figure 13(Right)).

In contrast, a strong destabilization of the TS wave by the sharp step ($\gamma$=1) for low frequency is reported by Edelmann & Rist (2015) where the separation bubble induces a strong increase in N-factor from N=4 to N=6 because of the existence of separation bubbles in front of the step. This contrasts with the weak destabilization influence of a smooth step on the TS wave in a boundary layer where negligible variation of the N-factor can be seen in figure 13 even for a large ($\hat{h}$ >20%) step height.

| Case | $Re_{\delta_i^*}$ | $Re_{\delta_r^*}$ | $Re_{\delta*}$ | $\mathcal{F}$ | $\hat{h}_r$% | $\hat{h}$% | $\hat{\lambda}$ | $\hat{d}$ | $L_x/\delta_{99}$ | $L_x/\delta_{99}$ |
|------|------|------|------|------|------|------|------|------|------|------|
| o | 596 | 1519 | 1885 | 42 | 74.77 | 0 | 5.5 | 4 | 312 | 30 |
| A | - | - | - | - | - | 5.00 | - | - | - | - |
| B | - | - | - | - | - | 10.00 | - | - | - | - |
| C | - | - | - | - | - | 15.00 | - | - | - | - |
| D | - | - | - | - | - | 30.00 | - | - | - | - |

TABLE 4. Parameters for a wall with an indentation and a smooth step. $Re_{\delta_i^*}$, $Re_{\delta_r^*}$ and $Re_{\delta*}$ are, respectively, the inlet Reynolds number, the Reynolds number at the centre of the indentation and the Reynolds number at the centre of the smooth step. $\mathcal{F}$ denotes the non-dimensional perturbation frequency. $\hat{h}_r$ and $\hat{\lambda}$ are used to define the indentation (3.1), which are normalised by the boundary layer thickness at the centre position of the roughness.

3D non-linear stability.

*DNS investigation of the effect on K- and H-type transition of two forward facing smooth steps excited by a high frequency TS wave.*

Secondary instabilities and transition to fully developed flow is a highly three dimensional. To this end further investigation of the influence of smooth steps on two transition scenarios is achieved with a hybrid Fourier-Spectral/*hp* discretisation is to solve 3D Incompressible Navier-Stokes equations. The transverse direction was assumed to be periodic and discretised by 80 Fourier modes and the streamwise and wall normal plane was discretized using 5576 elements (quad and triangle) within which a polynomial expansion of degree 7 is imposed. K- and H-type transitions are simulated for the flow over a flat plate and with smooth steps. A Blasius profile is imposed at the inflow and, for both scenarios, a wall-normal velocity along the disturbance strip is prescribed by the blowing and suction boundary condition (Huai *et al.* 1997),

$$v(x, z, t) = A \cdot f(x) \cdot \sin(\omega_A t) + B \cdot f(x) \cdot g(z) \cdot \sin(\omega_B t + \varphi), \qquad (4.1)$$

where $\omega_A$ and $\omega_B$ are the frequencies of the 2D TS wave and the oblique waves, respectively. *A* and *B* are the disturbance amplitudes of the fundamental and the oblique waves. We denote by $\varphi$ the phase shift between two modes. As considered by (Huai *et al.* 1997) and Sayadi *et al.* (2013), we consider the simplest case in the present study and $\varphi$ is equal to 0. As indicated by Sayadi *et al.* (2013) the above function models the effect of vibrating ribbon-induced disturbances. The function f(x) is defined by (Fasel & Konzelmann 1990)

$$f(x) = 15.1875\xi^5 - 35.4375\xi^4 + 20.25\xi^3, \qquad (4.2)$$

with the parameter $\xi$

$$\xi = \begin{cases} \dfrac{x - x_1}{x_m - x_1} & \text{for} \quad x_1 \leqslant x \leqslant x_m \\ \dfrac{x_2 - x}{x_2 - x_m} & \text{for} \quad x_m \leqslant x \leqslant x_2 \end{cases}, \qquad (4.3)$$

where xm = (x$_1$ + x$_2$)/2 and g(z) = cos(2πz/λz) with the transverse wavelength λz. At x$_1$ and x$_2$, $Re_{\delta_{x1}^*}$ and $Re_{\delta_{x2}^*}$ are equal to 591.37 and 608.51, respectively. The distribution *f(x)* can produce clean localized vorticity disturbances and have negligible time-dependent changes of the mean flow (Fasel & Konzelmann 1990). For K-type transition, the oblique waves have the same frequency as the two dimensional wave ($\omega_A = \omega_B$). Also, for H-type transition, the oblique waves are sub-harmonic ($\omega_A = 2\omega_B$). All parameters used in the investigation are given in Table 5. Note that the frequency used for the perturbation are consistent with the parameters used for linear analysis in Table1. Referring now to **FIG. 14,** the schematic of the computational domain is illustrated. **FIG. 14** illustrates overview of the computational for the flat plate setup with a Blasius boundary layer profile at the inflow, a disturbance strip and two smooth forwards facing steps.

| $Re_{\delta_i^*}$ | $Re_{\delta_{c_1}^*}$ | $Re_{\delta_{c_2}^*}$ | $\mathcal{F}_A$ | $\mathcal{F}_B$ | $A/U_\infty$ | $B/U_\infty$ | $\hat{h}\%$ | $L_x/\delta_{99}$ | $Ly/\delta_{99}$ | $L_z/\delta_{99}$ | $\lambda_z/\delta_{99}$ | $T$ |
|---|---|---|---|---|---|---|---|---|---|---|---|---|
| 320 | 680 | 786 | 150 | 150 | 0.5% | 0.03% | 0 | 340 | 30 | 8 | 4 | 20 |
| - | - | - | - | 75 | - | - | - | - | - | - | - | |
| - | - | - | - | 150 | - | - | 5.48 | - | - | - | - | - |
| - | - | - | - | 75 | - | - | 5.48 | - | - | - | - | - |
| - | - | - | - | 150 | - | - | 12.79 | - | - | - | - | - |
| - | - | - | 75 | - | - | - | 12.79 | - | - | - | - | - |

TABLE 5. Parameters used for the DNS simulations. $\mathcal{F}_A$ and $\mathcal{F}_B$ denote non-dimensional perturbation frequencies of the disturbance strip. $A/U_\infty$ and $B/U_\infty$ are the relative amplitudes of the disturbance amplitudes of the fundamental and oblique waves, respectively. The spanwise $L_z$ extent of the domain is expressed as function of the boundary layer thickness $\delta_{99}$. $T$ is the finial non-dimensional time length scale which we simulate, which is defined by $T = tU_\infty/L$. If $\lambda_z$ is non-dimensionalised by the inlet boundary layer thickness which almost has the same non-dimensional value as the scale used in Sayadi *et al.* (2013). The choice of $\lambda_z/\delta_{99}$ is equivalent to a spanwise wavenumber about

$$0.35 \text{ at } Re_{\delta_{c_1}^*}.$$

*Effect of smooth forward facing steps on K- and H-type transitions*

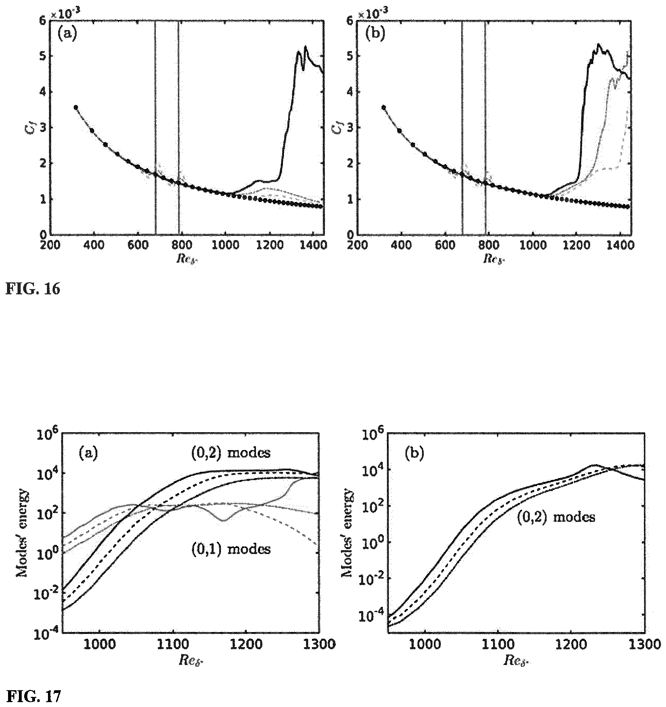

**FIG. 15** illustrates an instantaneous contours of the streamwise velocity in a x-z plane at height of

$$y = 0.6\delta_{99}^i$$

in $Re_{\delta^*}$E [963,1111] for K- in (a) and H-type transition scenarios for a flat plate in (b). In **FIG. 15,** the validation of the DNS results for both K- and H-type transitions is corroborated by recovering the aligned arrangement of the A vortices for the K-type transition (see figure 15(a)) and staggered arrangement for the H-type transition (see figure 15(b)) as experimentally observed by Berlin *et al.* (1999) for the flat plate boundary layer. **FIG. 16** illustrates a comparison of the time- and spanwise averaged skin friction versus streamwise position $Re_{\delta^*}$ for K- (a) and H-type (b) transition scenarios for a flat plate (solid line), two steps of height $\hat{h}$=5.48% (dot-dashed line) and two steps of height $\hat{h}$=12.79% (dashed line). In **FIG. 16,** the evolution of the skin-friction coefficient versus $Re_{\delta^*}$ for two different normalized height scales is shown. We observe that, for a flat plate boundary layer, the skin friction coefficient diverges from that of the Blasius boundary layer wherewhere A vortices are clearly observed, as illustrated in figure 15. In fact, A vortices appear further upstream but here we only show the A vortices from the location where the skin friction coefficient diverges. The streamwise evolution of the skin-friction (see figure 16) shows the K-type transition is fully inhibited by the two smooth steps whereas the H-type transition is delayed. Additionally, increasing the height ($\hat{h} < 20\%$) further reduces the skin friction coefficient C$_f$ in both scenarios. The observation of these phenomena supports the result of linear analysis.

To gain further insight into the different impact on two transition scenarios of the two forward facing smooth steps we consider the energy growth of the main modes. We label these modes using the notation ($\omega,\beta$) (Berlin *et al.* 1999), where $\omega$ and $\beta$ are respectively, the frequency and transverse wavenumber each normalized by the corresponding fundamental frequency/wavenumber. It has been observed that the K-type transition scenario has the main initial energy in the (1, 0) mode. The (1, ±1) mode also generates the (0, ±2) mode with a small amplitude through non-linear interaction (Berlin *et al.* 1999). At the late stage, the (0, ±2) mode can grow to an amplitude comparable to that of the (0, ±1) mode.

Laurien & Kleiser (1989) and Berlin *et al.* (1999) have shown that the initial conditions for the H-type transition has the main energy in the (1,0) mode with a small amount in the oblique subharmonic (1/2, $\pm$1) mode. The important mode is the vortex-streak (0,$\pm$2) mode, which is nonlinearly generated by the subharmonic mode and vital in the transition process. Referring now to FIG. 17, the (0, 2) mode plays a significant role in the late stages of transition for both transition scenarios with the two smooth steps. For the K-type scenario, in the transition regime, the energy of mode (0, 2) grows and exceeds the energy of mode (0, 1). For the flat plate, the energy of mode (0,1) finally grows again until turbulence occurs. The energy of mode (0, 2) with the two smooth steps is less than that of mode (0, 2) for the flat-plate and increasing normalised smooth step height $\hat{h}$ yields stronger reduction of the energy. A similar reduction in energy is also observed for mode (0,1). Furthermore, the energy of mode (0,2) exceeds that of mode (0,1) in $Re_{\delta^*}$=1080 for $\hat{h}$=5.48% to $Re_{\delta^*}$=1100 for $\hat{h}$=12.79% (figure 17(a)) and from this points onwards the energy of mode (0,1) decays. Based on the results presented in figure 17(a), we observe that the transverse modulation induced by mode (0,1) with energy decaying on the smooth steps leads to the stabilisation of the boundary layer. FIG. 17 illustrates a comparison of the energy in modes (0,1) in blue and (0,2) in black versus streamwise positon $Re_{\delta^*}$ over a flat plate (solid line), two smooth steps of height $\hat{h}$=5.48% (dashed line) and two smooth steps of height $\hat{h}$=12.79% (dot-dashed line) for K- in (a) and H-type transition scenarios in (b).

In the above, we did not consider the influence of the smooth steps and other parameters (e.g. $\varphi$) on other modes at the weakly-nonlinear stages of transition. Experimentally, Kachanov & Levchenko (1984) and Borodulin *et al.* (2002) discussed the influence of the initial phase shift between the fundamental wave and the sub-harmonic pair on the resonant amplification. The phase shift has particular importance on the H-type interaction. Addressing how the smooth step influences this phase shift will be done in next section.

| Group | Case | $\mathcal{F}_A$ | $\mathcal{F}_B$ | $A/U_\infty$ | $B/U_\infty$ | $\hat{h}$% | $\varphi$ | $\mathcal{N}(0,\sigma^2)$ (PDF of $\xi$) |
|---|---|---|---|---|---|---|---|---|
| 1 | A | 150 | N/A | 0.5% | N/A | 0 | N/A | $\sigma$=5%·$A$ |
|   | B | - | - | - | - | 5.48% | - | - |
|   | C | - | - | - | - | 12.79% | - | - |
| 2 | A | 150 | N/A | 0.5% | N/A | 0 | N/A | $\sigma$=10%·$A$ |
|   | B | - | - | - | - | 5.48% | - | - |
|   | C | - | - | - | - | 12.79% | - | - |
| 3 | A | 150 | 75 | 0.5% | 0.03% | 0 | $\pi/4$ | $\sigma$=10%·$A$ |
|   | B | - | - | - | - | 12.79% | - | - |
| 4 | A | 150 | 75 | 0.5% | 0.03% | 0 | $\mathcal{U}(0,2\pi)$ | $\sigma$=10%·$A$ |
|   | B | - | - | - | - | 12.79% | - | - |

TABLE 6. Parameters used in (4.4) and (4.5) for the DNS simulations. $\mathcal{U}(0,2\pi)$ denotes random number between 0 and $2\pi$ with a uniform distribution. The probability density function (PDF) of random variable $\xi(\cdot, t)$ is in a normal distribution $\mathcal{N}(\mu,\sigma^2)$ with mean $\mu$ and standard deviation $\sigma$. The parameters defined by Groups 1 and 2 are used for (4.4) and The parameters defined by Groups 3 and 4 are used for (4.5). 'N/A' means 'Not Applicable'.

*Effect of smooth forward facing steps on transition by white noise*

In view of the possible deployment of such flow control strategies, it is pertinent to assess the effect of the smooth forward facing steps on a more general transition route than the K- and H-type transition analysed so far in this paper. To understand the transition delay effect of smooth forward facing steps with noise akin to environmental noise, we introduce Gaussian white noise into DNS. The white noise is introduced into boundary conditions by Gaussian temporal $\delta$-correlated process $\{\xi(x,t)\}$ with $\mathbb{E}[\xi(\cdot,t)] = 0$ and $\mathbb{E}[\xi(\cdot, t + dt)\xi(\cdot,t)] = \sigma^2\delta(dt)$ where $\sigma$ is constant. The disturbance strip expression (4.1) is replaced by the following expressions

$$v_{\varphi,\xi}(x,z,t;\varphi,\xi) = A \cdot f(x) \cdot \sin(\omega_A t) + B \cdot f(x) \cdot g(z) \cdot \sin(\omega_B t + \varphi(t)) + \xi(x,t), \quad (4.5)$$

or

$$v_\xi(x, z, t; \xi) = A \cdot f(x) \cdot \sin(\omega_A t) + \xi(x, t), \qquad (4.4)$$

where $\varphi$ is a given phase shift or a uniform random phase shift. In Table 6, configurations of the parameters in (4.4) and (4.5) are given. The computational geometry, the disturbance position and the two step positions are kept the same as defined in Table 5.

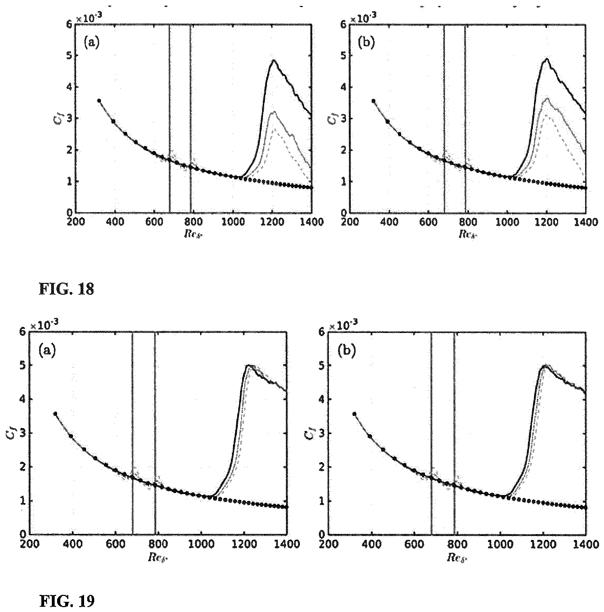

FIG. 18 illustrates a comparison of the time- and spanwise-averaged skin friction against $Re_{\delta^*}$ for white-noise of standard variation $\sigma = 5\%$ in (a) and $\sigma = 10\%$ in (b) induced transition for a flat plate (solid line), two smooth steps of height $\hat{h}$=5.48% (dot-dashed line) and two smooth steps of height $\hat{h}$=12.79% (dashed line). The parameters of this setup are given in the Group 1 of Table 6 and the Blasius boundary layer profile is given for reference (circles). The time-averaging is conducted for two convective time units, before full transition is reached. In FIG. 18 , (a-b), we show the skin friction profiles for two different noise levels without considering sub-harmonic disturbance before downstream fully developed turbulence is reached. We observe that in the flat plate boundary layers, transition to turbulence is much quicker than that in the boundary layers over two-smooth steps. The skin friction of the flat plate boundary is greater than that of the boundary layer over two smooth steps. By considering the time scale to reach a turbulent state, two smooth steps have the ability of increasing this time scale. Further, we assume that the environment white noise is always present. Referring now to FIG. 18. (see c-d), we give the skin friction profiles calculated after fully developed downstream turbulence is reached. We notice that there still exists a transition delay effect although the effect is not significantly strong. From figure 18, we also observe that a higher $\hat{h}$ (larger steepness y(x)) has a stronger delay effect and a higher noise level induces a more upstream transition position.

A phase relation between the fundamental and subharmonic modes is very important in transition. We now consider phase shift with white noise ($\sigma = 10\% \cdot A$) in the disturbance defined by (4.5). Calculations are implemented by considering two situations: (i) a fixed phase shift $\varphi = \pi/4$; (ii) uniform random phase shift. We here only consider one height parameter h = 12.79% because of the significant computational cost of these DNS.

FIG. 19 illustrates a comparison of the time- and spanwise-averaged skin friction against $Re_{\delta^*}$ for white-noise of standard variation $\sigma = 5\%$ in (a) and $\sigma = 10\%$ in (b) induced transition for a flat plate (solid line), two smooth steps of height $h$=5.48% (dot-dashed line) and two smooth steps of height $\hat{h}$=12.79% (dashed line). The parameters of this setup are given in the Group 1 of Table 6 and the Blasius boundary layer profile is given for reference (circles). The time-averaging is conducted for two convective time units, after full transition is reached. In FIG. 19, , the skin friction profiles are given for two settings of the phase parameter $\varphi$. Figure 19(a) shows that with a fixed phase shift and white noise, the two smooth steps configuration has a transition delay effect. When uniform random phase shift is considered, the transition delay is also observed as shown in figure 19(b). Moreover, by comparing the skin friction profiles in figures 19(a) and 19(b), we notice that the skin friction profiles with a fixed phase $\varphi = \pi/4$ diverge from that of the Blasius boundary layer earlier than those with random phase shift.

In order to further investigate the phenomenon in figure 18(a-b) and analyse the transient property of the skin friction, the following expression is introduced

$$C_f(x,t) = \frac{\omega}{2\pi} \int_{s \in I_{\pi/\omega}(t)} C_f(x,s)\mathrm{ds}, \qquad (4.6)$$

where $\omega$ is the typical frequency in (4.4) or (4.5) and Cf(x,s) represents transient transverselyaveraged skin friction at the time s. $I_\delta(t)$ indicates a closed $\delta$ (=$\pi/\omega$) neighbourhood centred at $t$. We set $\omega = \omega_A$ and $\omega = \omega_B$ for the disturbances (4.4) and (4.5), respectively.

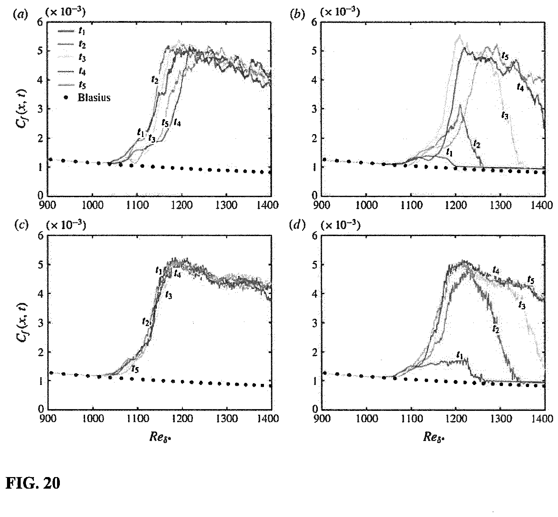

Referring now to FIG. 20, a comparison of transition property of spanwise-averaged skin friction without (a,b) and with (c,d) phase shift with the flat plate boundary corresponding to case A in Group 2 of Table 6 in (a), the boundary with two smooth steps of height $\hat{h}$=12.79% (case C of group 2 of Table 6) in (b), the flat plate boundary layer corresponding to a random phase shift (case A of Group 4 in Table 6) in (c) and finally two smooth steps of height $\hat{h}$=12.79% with a random phase shift (case B group 4 in Table 6). For all cases the standard variation of the noise was $\sigma = 10\%$ and the non-dimensional time parameters are $t_1$ = 3.42, $t_2$ = 3.66, $t_3$ = 3.90 and $t_4$ = 4.14, $t_5$ = 4.38 in (a,b) and are $t_1$ = 3.60, $t_2$ = 3.84, $t_3$ = 4.08 and $t_4$ = 4.32 $t_5$ = 4.56 in (c,d). In FIG. 20, the Cf (x, t) profiles are provided for the disturbances with and without a phase shift when white noise is present. From figure 20(a-b), without phase shift, we observe that at the time $t_1$, in the flat plate boundary layer, downstream turbulence is well developed and the $C_f(x,t)$ profiles approach a saturated state much earlier than those profiles in the boundary layer over two smooth steps. Until the time ts is reached, the turbulence is not fully developed downstream in the boundary layer over two smooth steps. The $C_f(x,t)$ profile almost needs one more convective time scale to reach fully developed turbulence from a laminar state, compared with the flat plate boundary transition. The similar phenomenon is observed for the disturbances with uniform random phase shift in figure 20(c-d). With two smooth steps, although a random phase shift is introduced, the transition to turbulence in the boundary layer over two smooth steps is still slower than that in the flat plate boundary layer and the transition is postponed more than one convective-time scale by two smooth steps.

By considering white noise and phase shift in disturbances, we demonstrate the nearly practical effect of the smooth steps on delaying laminar-turbulent transition. In conclusion, we considered smooth steps of varying heights and considered the stabilising and destabilizing role on TS waves. Linear stability analyses were conducted for 140<F<160, F = 100 and F=42 frequency forcing (where an upstream indentation was also introduced) with respect to the neutral stability curve of the flat plate boundary layer. One and two step configurations with different heights and smoothness were analysed. Finally, direct numerical simulation of various transition situations were undertaken for frequencies 140<F<160 forcing case to confirm the results from the linear analysis.

The net effect of a smooth forward facing step on the stability of the TS mode clearly depends on height. Small height smooth steps ($\hat{h}$ <10%) caused minimal amplification for TS waves of frequency ranging from $F \in [42,160]$. For h = 5,10% both the single and two forward facing smooth step configurations lead to a stabilising effect at high frequencies $F \in [140, 160]$ of the TS-mode which a notable improvement when two steps were considered. Although for $\hat{h}$>20% destabilisation was generally observed, when considering a smooth step $\gamma$ < 1 it appears to have a weaker destabilising effect than previous papers that have reported of sharp step configurations where $\gamma$ = 1. When considering lower frequencies F E [42,100] we again observe that small height smooth steps h < 10% are relatively safe in the sense they do not significantly amplify the TS wave. Again this result contrasts with results reported for a sharp forward facing step and we attribute the large amplification of the TS wave by a sharp step to occurrence of separation bubbles. This effect is similar to the destabilisation effect induced by the separation bubbles in an indentation or behind a hump or a bump (Gao *et al.* 2011; Park & Park 2013; Xu *et al.* 2016). From a global stability point of view, a smooth step, even with a relatively large height, does not lead to recirculation bubbles meaning that global instability are unlikely to be introduced.

The results obtained by DNS, for a frequency forcing F = 150, support the conclusion that smooth steps can have non-negligible and positive impact on the stability of the boundary layer. For $\hat{h}$ = 5.48 and $\hat{h}$ = 12.79 the transition to fully developed turbulent state is even delayed for the H-type transition scenario and suppressed for the K-type scenario. Finally, even in the more general case, when Gaussian white noise with fixed and random phase shift is present, the transition is delayed by smooth steps, leading us to believe the configuration of the two smooth steps presented in this paper show great potential in delaying transition.

It should be appreciated that the particular implementations shown and described herein are representative of the invention and its best mode and are not intended to limit the scope of the present invention in any way. Furthermore, any connecting lines shown in the various figures contained herein are intended to represent exemplary functional relationships and/or physical couplings between various elements.

The specification and figures are to be considered in an illustrative manner, rather than a restrictive one.

Accordingly, the scope of the invention should be determined by the claims appended hereto.

As used herein, the terms "comprises", "comprising", or any variation thereof, are intended to refer to a non-exclusive listing of elements, such that any process, method, article, composition or apparatus of the invention that comprises a list of elements does not include only those elements recited, but may also include other elements described in this specification.

**List of references:**

1. Laminar flow Control through heating of the leading edge (EP 0939028 A2)

2. Device for regulating and recovering the boundary layer over the surface of a body such as an aircraft in flight (US 3951360 A)

3. Passive removal of suction air for laminar flow control, and associated systems and methods (US 20090212165 A1)

4. Airplane configuration designed for the simultaneous reduction of drag and sonic boom (US 4114836 A)

5. Laminar Flow through heating (US 6027078 A)

6. Boundary control through transpiration panel (US 5772156 A)

7. Laminar flow control airfoil (US 4813631 A)

8. Laminar flow control airfoil (US 4575030 A)

9. Perforated wing panel with variable porosity (US 5263667 A)

10. Laminar Flow Skin (EP 0679572 A2)

11. Modified trailing edge for laminar flow airfoils (US 7093792 B2)

12. Hybrid laminar flow nacelle (US 4993663 A)

13. A flow control device for controlling a fluid flow over a surface (WO2010115656A1)

14. Laminar Flow Panel (US20140326834A1)

15. Laminar Flow Airfoil (US6905092B2)

16. Control of laminar flow in fluids by means of acoustic energy (US4802642A)

17. Apparatus for active fluid control (US5983944A)

18. A vertical axis turbine foil structure with surface fluid transfer openings (GB2477509A)

19. Flow Control Arrangement (US20050232770A1)

20. Platform or surface laminar flow for an aircraft engine (FR2857650A1)

BASSOM, A. P. & HALL, P. 1994 The receptivity problem for O(1) wavelength Görtler vortices. Proc. Roy. Soc. Land. A 446, 499-516.

BASSOM, A. P. & SEDDOUGUI, S. O. 1995 The receptivity problem for O(1) wavelength Görtler vortices. Theoret. Comput. Fluid Dynamics 7, 317-339.

BERLIN, S., WIEGEL. M. & HENNINGSON, D. S. 1999 Numerical and experimental investigations of oblique boundary layer transition. J. Fluid Mech. 393, 23-57.

BERTOLOTTI, F. P. 1996 On the birth and evolution of disturbances in three-dimensional boundary layers. In IUTAM Symposium on Nonlinear Instability and Transition in Three-Dimensional Boundary Layers (ed. P. W. Duck & P. Hall), , vol. 35, pp. 247-256. Springer Netherlands.

BERTOLOTTI. F. P. 2003 Response of the blasius boundary layer to free-stream vorticity. Phys. Fluids 9 (8), 2286-2299.

BIPPES, H. 1999 Basic experiments on transition in three-dimensional boundary layers dominated by crossflow instability. Prog. Aerosp Sci 35 (4), 363-412.

BORODULIN, V. I., IVANOV. A. V., KACHANOV, Y. S. & ROSCHEKTAEV, A. P. 2013 Receptivity cocients at excitation of cross-flow waves by free-stream vortices in the presence of surface roughnesse. J. Fluid Mech. 716, 487-527.

BORODULIN, V. I., KACHANOV, Y. S. & KOPTSEV, D. B. 2002 Experimental study of resonant interactions of instability waves in self-similar boundary layer with an adverse pressure gradient: I. tuned resonances. J. Turbul. 3 (62), 1-38.

BREHM, C., KOEVARY, C., DACKERMANN, T & FASEL, H. F. 2011 Numerical investigations of the influence of distributed roughness on blasius boundary layer stability. AIAA pp. 2011-563.

CANTWELL, C. D., MOXEY, D., COMERFORD, A., BOLIS, A., ROCCO, G., MENGALDO. G., GRAZIA, D. DE, YAKOVLEV, S., LOMBARD, J. E., EKELSCHOT, D., JORDI, B., XU, H., MOHAMIED, Y., ESKILSSON, C., NELSON, B., VOS, P., BIOTTO, C., KIRBY, R.M. & SHERWIN, S.J. 2015 Nektar++: An open-source spectral/hp element framework. Computer Physics Communications 192, 205-219.

CHOUDHARI, M. 1994 Boundary-layer receptivity to three-dimensional unsteady vortical disturbances in free stream. AIAA Paper pp. 96-0181.

CHOUDHARI, M. & STREETT, C. L. 1992 A finite reynolds number approach for the prediction of boundary-layer receptivity in localized regions. Phys. Fluids A 4, 2495-2514.

CORKE, T. C., SEVER, A. BAR & MORKOVIN, M. V. 1986 Experiments on transition enhancements by distributed roughness. Phys. Fluids 29, 3199-3213.

Cossu, C. & BRANDT, L. 2002 Stabilization of Tollmien-Schlichting waves by finite amplitude optimal streaks in the blasius boundary layer. Phys. Fluids 14 (8), L57—L60.

Cossu, C. & BRANDT. L. 2004 On Tollmien-Schlichting-like waves in streaky boundary layers. Eur. J. Mech. B/Fluids 23, 815—833.

CROUCH, J., KOSORYGIN, V. & NG, L. 2006 Modeling the effects of steps on boundary-layer transition. In IUTAM Symposium on Laminar-Turbulent Transition (ed. R. Govindara-jan), Fluid Mechanics and Its Applications, vol. 78, pp. 37-44. Springer, Dordrecht, The Netherlands.

CROUCH, J. D. 1994 Distributed excitation of tollmienschlichting waves by vortical free stream disturbances. Phys. Fluids 6 (1), 217-223.

DAVIES. C. & CARPENTER, P. W. 1996 Numerical simulation of the evolution of Tollmien-Schlichting waves over finite compliant panels. J. Fluid Mech. 335, 361—392.

DENIER, J. P., HALL, P. & SEDDOUGUI, S. O. 1991 On the receptivity problem for Görtler vortices: vortex motions induced by wall roughness. Phil. Trans. R. Soc. A 335, 51-85.

DIETZ, A. J. 1999 Local boundary-layer receptivity to a convected free-stream disturbance. J. Fluid Mech. 378, 291—317.

DOWNS, R. D. & FRANSSON, J. H. M. 2014 Tollmien-Schlichting wave growth over spanwise-periodic surface patterns. J. Fluid Mech. 754, 39—74.

DRAZIN, P. G. & REID, W. H. 1981 Hydrodynamic Stability. Combridge University Press.

DUCK, P. W., RUBAN, A. I. & ZHIKHAREV, C. N. 1996 Generation of Tollmien-Schlichting waves by free-stream turbulence. J. Fluid Mech. 312, 341—371.

EDELMANN, C. & RIST, U. 2013 Impact of forward-facing steps on laminar-turbulent transition in transonic flows without pressure gradient. In 51st AIAA Aerospace Sciences Meeting including the New Horizons Forum and Aerospace Exposition.

EDELMANN, C. & RIST, U. 2015 Impact of forward-facing steps on laminar-turbulent transition in transonic flows. AIAA Journal 53 (9), 2504—2511.

FASEL, H. & KONZELMANN. U. 1990 Non-parallel stability of a flat plate boundary layer using the complete navier-stokes equations. J. Fluid Mech. 221, 311—347.

FRANSSON, J. H. M., BRANDT, L., TALAMELLI, A. & Cossu, C. 2005 Experimental study of the stabilization of Tollmien-Schlichting waves by finite amplitude streaks. Phys. Fluids 17(5), 054110.

FRANSSON, J. H. M., TALAMELLI, A., BRANDT, L. & Cossu, C. 2006 Delaying transition to turbulence by a passive mechanism. Phys. Rev. Lett. 96, 064501.

GAO, B., PARK, D. H. & PARK, S. O. 2011 Stability analysis of a boundary layer over a hump using parabolized stability equations. Fluid Dyn. Res. 43 (5), 055503.

GARZON, G. A. & ROBERTS, M. W. 2013 Effect of a small surface wave on boundary-layer transition. AIAA pp. 2013-3110.

GASTER, M. 1965 On the generation of spatially growing waves in a boundary layer. J. Fluid Mech. 22, 433-441.

GOLDSTEIN, M. E. 1983 The evolution of Tollien-Schlichting waves near a leading edge. J. Fluid Mech. 127, 59—81.

GOLDSTEIN, M. E. 1985 Scattering of acoustic waves into Tollmien-Schlichting waves by small streamwise variations in surface geometry. J. Fluid Mech. 154, 509—529.

GOLDSTEIN, M. E. & HULTGREN, L. S., 1987 A note on the generation of tollmien-schlichting waves by sudden curvature change. J. Fluid Mech. 181, 519—525.

GOLDSTEIN, M. E. & LEIB, S. J. 1993 Three-dimensional boundary layer instability and separation induced by small-amplitude streamwise vorticity in the upstream flow. J. Fluid Mech. 246, 21-41.

GRAY, W. E. 1952 The effect of wing sweep on laminar flow. Tech. Rep. RAE TM Aero 255. British Royal Aircraft Establishment.

HALL, P. 1990 Görtler vortices in growing boundary layers: The leading edge receptivity problem, linear growth and the nonlinear breakdown stage. Mathematika 37 (02), 151—189.

HAMMOND, D. A. & REDEKOPP, L. G. 1998 Local and global instability properties of separation bubbles. European Journal of Mechanics - B/Fluids 27 (2), 145—164.

HERBERT, T. 1988 Secondary instability of boundary-layers. Annu. Rev. Fluid Mech. 20, 487— 526.

HORTON. H. P. 1968 A semi-empirical theory for the growth and bursting of laminar separation bubbles. PhD Dissertation, University of London .

HUAI, X., JOSLIN, R. D. & PIOMELLI, U. 1997 Large-eddy simulation of trantion to turbulence in boundary layers. Theor. Comput. Fluid Dyn. 9, 149—163.

JONES, B. M. 1938 Stalling. J. R. Aero. Soc. 38, 747—770.

KACHANOV, Y. S. 1994 Physical mechanisms of laminar-boundary-layer transition. Annu. Rev. Fluid Mech. 26, 4110482.

KACHANOV, Y. S., KOZLOV, V. V. & LEVCHENKO, V. Y. 1979a Origin of TollmienSchlichting waves in boundary layer under the influence of external disturbances. Fluid Dyn. 13, 704— 711.

KACHANOV, Y. S., KOZLOV, V. V., LEVCHENKO, V. Y. & MAKSIMOV, V. P. 1979b Transformation of external disturbances into the boundary layer waves. In Sixth International Conference on Numerical Methods in Fluid Dyn (ed. H. Cabannes, M. Holt & V. Rusanov), pp. 299—307. Springer Berlin Heidelberg.

KACHANOV, Y. S. & LEVCHENKO, V. Y. 1984 The resonant interaction of disturbances at laminar-turbulent transition in a boundary layer. J. Fluid Mech. 138, 209—247.

KARNIADAKIS, G., ISRAELI, M. & ORSZAG, S. 1991 High-order splitting methods for the incompressible navier-stokes equations. J. Comput. Phys. 97 (2), 414—443.

KENDALL, J. M. 1985 Experimental study of disturbances produced in a pre-transitional laminar boundary layer by weak free stream turbulence. AIAA Paper pp. 85—1695.

KENDALL, J. M. 1990 Boundary-layer receptivity to free stream turbulence. AIAA Paper pp. 90—1504.

KENDALL, J. M. 1991 Studies on laminar boundary-layer receptivity to free stream turbulence near a leading edge. In Boundary Layer Stability and Transition to Turbulence (ed. D. C. Reda, H. L. Reed & R. K. Kobayashi). , vol. 114, pp. 23—30. ASME FED.

KERSCHEN, E. J. 1989 Boundary layer receptivity. AIAA 89—1109.

KERSCHEN, E. J. 1990 Boundary layer receptivity theory. Appl. Mech. Rev 43, S152-S157.

KLEBANOFF. P. S., TIDSTROM, K. D. & SARGENT, L. M. 1962 The three-dimensional nature of boundary-layer instability. J. Fluid Mech. 12 (1), 1—34.

KOZLOV, V. V. & RYZHOV, O. S. 1990 Receptivity of boundary layers: Asymptotic theory and experiment. Proc. R. Soc. London A 429, 341—373.

LAURIEN, E. & KLEISER, L. 1989 Numerical simulation of boundary-layer transition and transition control. J. Fluid Mech. 199, 403—440.

MORKOVIN, M. V. 1969a Critical evaluation of transition from laminar to turbulent shear layers with emphasis on hypersonically travelling bodies. Tech. Rep. AFFDL-TR 68-149. US Air Force Flight Dynamics Laboratory, Wright Patterson Air Force Base, Ohio.

MORKOVIN, M. V. 1969b The many faces of transition. In Viscous Drag Reduction (ed. C. S. Wells), pp. 1—31. New York: Plenum.

MURDOCK, J. W. 1980 The generation f a Tollmien-Schlichting wave by a sound wave. Proc. R. Soc. Lond. A 372, 571—534.

NENNI, J. P. & GLUYAS, G. L. 1966 Aerodynamic design and anlaysis of an LFC surface. Astronautics and Aeronautics 4 (7), 1—31.

NISHIOKA, M. & MORKOVIN, M. V. 1986 Boundary-layer receptivity to unsteady pressure gradients: experiments and overview. J. Fluid Mech. 171, 219—261.

PARK, D. & PARK, S. O. 2013 Linear and non-linear stability analysis of incompressible boundary layer over a two-dimensional hump. Computers & Fluids 73, 80—96.

PERRAUD, J., ARNAL, D., SERAUDIE. A. & TRAN, D. 2004 Laminar-turbulent transition on aerodynamic surfaces with imperfections. In NATO Research and Technology Organisation Applied Vehicle Technology Panel 111 Symposium. Prague, Czech Republic.

REED, H. L. & SARIC, W. S. 1989 Stability of three-dimensional boundary layers. Annu. Rev. Fluid Mech. 21, 235—84.

REIBERT, M. S., SARIC, W. S., CARRILLO, JR. R. B. & CHAPMAN, K. L. 1996 Experiments in nonlinear saturation of stationary crossflow vortices in a swept-wing boundary layer. AIAA 96—0184.

RIST, U. 1993 Nonlinear effects of two-dimensional and three-dimensional disturbances on laminar separation bubbles. In Nonlinear Instability of Nonparallel Flows (ed. S. P. Lin, W. R. C. Phillips & D. T. Valentine), pp. 330—339. Springer-Verlag Berlin Heidelberg.

ROGLER, H. L. & RESHOTKO, E. 1975 Disturbances in a boundary layer introduced by a low intensity array of vortices. SIAM J. Appl. Mech. 28 (2), 431-426.

RUBAN, A. I. 1984 On tollmien-schlichting wave generation by sound. Izv. Akad. Nauk SSSR, Mekh. Zhidk. Gaza 5, 44.

RUBAN, A. I. 1985 On tollmien-schlichting wave generation by sound. In Laminar-turbulent transition (ed. V. V. Kozlov), pp. 313—320. Springer Berlin Heidelberg.

RUBAN, A. I., BERNOTS, T. & PRYCE, D. 2013 Receptivity of the boundary layer to vibrations of the wing surface. Journal of Fluid Mechanics 723, 480-528.

SARIC, W. S. 1990 Low-speed experiments: Requirements for stability measurements. In Instability and Transition (ed. M. Y. Hussaini & R. G. Voight), ICASE/NASA LaRC Series, vol. 1, pp. 162—174. Springer-Verlag New York.

SARIC, W. S. 1994 Görtler vortices. Annu. Rev. Fluid Mech. 26, 379—409.

SARIC, W. S., CARRILLO, JR. R. B. & REIBERT, M. S. 1998 Nonlinear stability and transition in 3-d boundary layers. Meccanica 33, 469—487.

SARIC, W. S., REED, H. L. & KERSCHEN, E. J. 2002 Boundary-layer receptivity to free-stream disturbances. Annu.

Rev. Fluid Mech. 34, 251—276.

SARIC, W. S., REED, H. L. & WHITE, E. B. 2003 Stability and transition of three-dimensional boundary layers. Annu. Rev. Fluid Mech. 35, 413-40.

SAYADI, T., HAMMAN, C. W. & MOIN, P. 2013 Direct numerical simulation of complete h-type and k-type transitions with implications for the dynamics of turbulent boundary layers. J. Fluid Mech. 724, 480-509.

SCHLICHTING, H. & GERSTEN, K. 1968 Boundary-Layer Theory. Mac Graw-Hill.

SCHUBAUER, G. B. & SKRAMSTAD, H. K. 1948 Laminar-boundary-layer oscillations and transition on a flat plat. NASA TR-909.

SHAHINFAR, S., SATTARZADEH, S. S., FRANSSON, J. H. M. & TALAMELLI, A. 2012 Revival of classical vortex generators now for transition delay. Phys. Rev. Lett. 109, 074501.

STUART, J. T. 1963 Hydrodynamic stability. In Laminar Boundary Layer (ed. L. Rosenhead), pp. 492—579. Oxford University Press.

TEMPLELMANN, D. T. 2011 Numerical study of boundary-layer receptivity on a swept wing. AIAA pp. 2011—3294.

THEOFILIS, V. 2000 Global linear instability in laminar separated boundary layer flow. In Proceedings of the IUTAM Laminar-Turbulent Symposium V (ed. H. Fasel W. Saric), pp. 663—668.

WANG, Y. X. & GASTER, M. 2005 Effect of surface steps on boundary layer transition. Exp. Fluids 39 (4), 679—686.

WÖRNER, A., RIST, U. & WAGNER, S. 2003 Humps/steps influence on stability characteristics of two-dimensional laminar boundary layer. AIAA 41 (2), 192—197.

WU, X. S. 2001a On local boundary-layer receptivity to vortical disturbances in the free stream. J. Fluid Mech. 449, 373-393.

WU, X. S. 2001b Receptivity of boundary layers with distributed roughness to vortical and acoustic disturbances: a second-order asymptotic theory and comparison with experiments. J. Fluid Mech. 431, 91—133.

Wu, X. S. & HOGG, LINDA W. 2006 Acoustic radiation of Tollmien-Schlichting waves as they undergo rapid distortion. J. Fluid Mech. 550, 307—347.

Xu, H., SHEHWIN, S., HALL, P. & WU, X.S. 2016 The behaviour of Tollmien-Schlichting waves undergoing small-scale localised distortions. J. Fluid Mech. 792, 499—525.

YOUNG, A. D. & HORTON, H. P. 1966 Stalling. AGARD CP 4, 779—811.

ZAVOL'SKII, N. A., REUTOV, V. P. & RYBUSHKINA, G. V. 1983 Excitation of TollmienSchlichting waves by acoustic and vortex disturbance scattering in boundary layer on a wavy surface. J. Appl. Mech. Tech. Phys 24, 355—361.

## Claims

1. A body adapted for relative movement with respect to a fluid, said movement creating a flow of fluid with respect to the body in a relative flow direction, said body having one surface with a surface profile f(x) $\in$ C$^1$ contacting the fluid, where x is the streamwise coordinate, and comprising two or more steps (20, 22, 24, 26) extending substantially parallel to each other, each step being a smooth step facing in relative flow direction towards the flow, said step being smooth when $0 \leq \Upsilon(x) = \frac{max|\partial_x f(x)|}{\sqrt{max|\partial_x f(x)|^2 + \varepsilon^{-2}}} < 1$ with $\varepsilon = \frac{\hat{h}}{\hat{d}} = \frac{h}{d}$ where $\hat{h} = \frac{h}{\delta_{99}}$ and $\hat{d} = \frac{d}{\delta_{99}}$ and where, respectively, h, d and $\delta_{99}$ are the step height (h), the step width (d) and the local boundary layer thickness in use,

   wherein the height (h) and the width (d) of each of the steps increase in relative flow direction,
   wherein said surface contains a leading edge (12) and each step consists in a first concave and then convex profile that does not have a substantially flat region and prevents in use, laminar separation bubbles either upstream or downstream of the steps.

2. The body of claim 1, wherein, in use, the height (h) of each of said steps is less than 30% of local boundary layer thickness ($\delta_{99}$) and preferably less than 20%.

3. The body of claim 2, wherein, in use, the width (d) of each of said steps is between two and ten times said local boundary layer thickness ($\delta_{99}$).

4. The body of claim 3, wherein, in use, said width (d) is between 3 and 5 times said local boundary layer thickness ($\delta_{99}$).

5. The body of any preceding claim, wherein a multiplicity of the substantially parallel steps is provided on at least 50% of the total area of said surface.

6. The body of any preceding claim, wherein a multiplicity of the substantially parallel steps is provided on at least 75% of the total area of said surface.

7. The body of any preceding claim, wherein a multiplicity of the substantially parallel steps is provided on substantially all of the total surface area of said surface.

8. The body of any preceding claim forming part of a fluid dynamic device.

9. The body of claim 8, said device being selected from the group comprising airfoils, airplane wings, propeller blades, wind turbine blades, low-pressure turbine blades in aero engines, turbine blades for hydropower plants, hydrofoils, airplane tail planes, vehicles for air or water transport, pipes, tubes and ducts.

10. The body of claim 9, said device being an airplane wing and said steps, substantially parallel to the leading edge, ranging in height (h) from about $1 \times 10^{-6}$ of the local wing chord near the leading edge to 0.1% of the local chord near the trailing edge of the wing.

11. The body of claim 10, said steps ranging in width (d) from about $1 \times 10^{-5}$ the local chord near the leading edge to about 1% of the local chord near the trailing edge of the wing, optionally comprised of a coating onto an existing body or of a single piece carbon-fibre leading edge and upper-surface panel, without joints or rivets typically manufactured separately and then attached to an existing wing box.

12. The body of any preceding claim, being at least substantially made of metal, polymeric, ceramic or composite material and said profile being produced by shaping, coating or 3D-printing.

## Patentansprüche

1. Körper, der für eine relative Bewegung hinsichtlich eines Fluids angepasst ist, wobei die Bewegung einen Fluidfluss hinsichtlich des Körpers in einer relativen Flussrichtung erzeugt, wobei der Körper eine Oberfläche mit einem Oberflächenprofil f(x) $\in$ C$^1$ aufweist, die das Fluid berührt, wobei x die Koordinate in Strömungsrichtung ist, und zwei oder mehr Stufen (20, 22, 24, 26) umfasst, die sich im Wesentlichen parallel zueinander erstrecken, wobei jede Stufe eine stetige Stufe ist, die in relativer Flussrichtung zu dem Fluss hin zeigt, wobei die Stufe stetig ist wenn $0 \leq$

$$\Upsilon(x) = \frac{max|\partial_x f(x)|}{\sqrt{max|\partial_x f(x)|^2 + \varepsilon^{-2}}} < 1 \quad \text{mit} \quad \varepsilon = \frac{\hat{h}}{\hat{d}} = \frac{h}{d} \quad \text{wobei} \quad \hat{h} = \frac{h}{\delta_{99}} \quad \text{und} \quad \hat{d} = \frac{d}{\delta_{99}}$$

, wobei h, d beziehungsweise $\delta_{99}$ die Stufenhöhe (h), die Schrittweite (d) beziehungsweise die Dicke der lokalen Grenzschicht in Verwendung ist,

wobei die Höhe (h) und die Weite (d) jeder der Stufen in der relativen Flussrichtung zunehmen,
wobei die Oberfläche eine Vorderkante (12) enthält und jede Stufe aus einem erst konkaven und dann konvexen Profil besteht, das keinen im Wesentlichen flachen Bereich aufweist und, in Verwendung, laminare Ablösungsblasen entweder stromaufwärts oder stromabwärts der Stufen verhindert.

2. Körper nach Anspruch 1, wobei, in Verwendung, die Höhe (h) jeder der Stufen weniger als 30 % der Dicke der lokalen Grenzschicht ( $\delta_{99}$) und vorzugsweise weniger als 20 % beträgt.

3. Körper nach Anspruch 2, wobei, in Verwendung, die Weite (d) jeder der Stufen zwischen dem Zwei- und Zehnfachen der Dicke der lokalen Grenzschicht ( $\delta_{99}$) beträgt.

4. Körper nach Anspruch 3, wobei, in Verwendung, die Weite (d) zwischen dem 3- und 5-fachen der Dicke der lokalen Grenzschicht ( $\delta_{99}$) beträgt.

5. Körper nach einem der vorhergehenden Ansprüche, wobei eine Vielzahl der im Wesentlichen parallelen Stufen auf wenigstens 50 % der Gesamtfläche der genannten Oberfläche bereitgestellt ist.

6. Körper nach einem der vorhergehenden Ansprüche, wobei eine Vielzahl der im Wesentlichen parallelen Stufen auf wenigstens 75 % der Gesamtfläche der genannten Oberfläche bereitgestellt ist.

7. Körper nach einem der vorhergehenden Ansprüche, wobei eine Vielzahl der im Wesentlichen parallelen Stufen auf im Wesentlichen der gesamten Gesamtoberfläche der genannten Oberfläche bereitgestellt ist.

8. Körper nach einem der vorhergehenden Ansprüche, der einen Teil einer fluiddynamischen Vorrichtung ausbildet.

9. Körper nach Anspruch 8, wobei die Vorrichtung aus der Gruppe ausgewählt ist, die Tragflächen, Flugzeugflügel, Propellerblätter, Windturbinenblätter, Niederdruckturbinenblätter in Flugtriebwerken, Turbinenblätter für Wasserkraftwerke, Tragflügelboote, Flugzeughöhenflossen, Fahrzeuge für den Luft- oder Wassertransport, Rohre, Schläuche und Kanäle umfasst.

10. Körper nach Anspruch 9, wobei die Vorrichtung ein Flugzeugflügel ist und die Stufen, die im Wesentlichen parallel zu der Vorderkante sind, sich in der Höhe (h) von etwa $1 \times 10^{-6}$ der lokalen Flügelsehne nahe der Vorderkante auf 0,1 % der lokalen Sehne nahe der Hinterkante des Flügels erstrecken.

11. Körper nach Anspruch 10, wobei die Stufen sich in der Weite (d) von etwa $1 \times 10^{-5}$ der lokalen Flügelsehne nahe der Vorderkante auf etwa 1 % der lokalen Sehne nahe der Hinterkante des Flügels erstrecken, optional bestehend aus einer Beschichtung auf einem bestehenden Körper oder aus einer einteiligen Kohlefaser-Vorderkante und einer oberen Oberflächenplatte, ohne Verbindungen oder Nieten, die normalerweise separat hergestellt und dann an einem vorhandenen Flügelkasten befestigt werden.

12. Körper nach einem der vorhergehenden Ansprüche, der wenigstens im Wesentlichen aus Metall, Polymer, Keramik oder Verbundmaterial besteht und wobei das Profil durch Formen, Beschichten oder 3D-Drucken produziert wird.


**Revendications**

1. Corps adapté pour un mouvement relatif par rapport à un fluide, ledit mouvement créant un écoulement de fluide par rapport au corps dans une direction d'écoulement relative, ledit corps ayant une surface avec un profil de surface $f(x) \in C^1$ en contact avec le fluide, où x est la coordonnée dans le sens de l'écoulement, et comprenant deux ou plusieurs marches (20, 22, 24, 26) s'étendant sensiblement parallèlement l'une à l'autre, chaque marche étant une marche lisse faisant face à la direction d'écoulement relative vers l'écoulement, ladite marche étant lisse quand

$$0 \leq \Upsilon(x) = \frac{max|\partial_x f(x)|}{\sqrt{max|\partial_x f(x)|^2 + \varepsilon^{-2}}} < 1 \quad \text{avec} \quad \varepsilon = \frac{\hat{h}}{\hat{d}} = \frac{h}{d} \quad \text{où} \quad \hat{h} = \frac{h}{\delta_{99}} \quad \text{et} \quad \hat{d} = \frac{d}{\delta_{99}}$$

et où, respectivement, h, d et $\delta_{99}$ sont la hauteur de la marche (h), la largeur de la marche (d) et l'épaisseur de couche limite locale en utilisation,

la hauteur (h) et la largeur (d) de chacune des marches augmentant dans la direction relative d'écoulement, ladite surface contenant un bord d'attaque (12) et chaque marche consistant en un premier profil concave, puis un profil convexe qui n'a pas de zone sensiblement plate et empêche, en utilisation, des bulles de séparation laminaire en amont ou en aval des marches.

2. Corps selon la revendication 1, dans lequel, en utilisation, la hauteur (h) de chacune desdites marches est inférieure à 30 % d'épaisseur de couche limite locale ($\delta_{99}$) et de préférence moins de 20 %.

3. Corps selon la revendication 2, dans lequel, en utilisation, la largeur (d) de chacune desdites marches est comprise entre deux et dix fois ladite épaisseur de couche limite locale ($\delta_{99}$).

4. Corps selon la revendication 3, dans lequel, en utilisation, ladite largeur (d) est comprise entre 3 et 5 fois ladite épaisseur de couche limite locale ($\delta_{99}$).

5. Corps selon l'une quelconque des revendications précédentes, dans lequel une multiplicité des marches sensiblement parallèles est prévue sur au moins 50 % de la surface totale de ladite surface.

6. Corps selon l'une quelconque des revendications précédentes, dans lequel une multiplicité des marches sensiblement parallèles est prévue sur au moins 75 % de la surface totale de ladite surface.

7. Corps selon l'une quelconque des revendications précédentes, dans lequel une multiplicité des marches sensiblement parallèles est prévue sur sensiblement toute la surface totale de ladite surface.

**8.** Corps selon l'une quelconque des revendications précédentes faisant partie d'un dispositif de dynamique des fluides.

**9.** Corps selon la revendication 8, ledit dispositif étant choisi dans le groupe comprenant des profils aérodynamiques, des ailes d'avion, des pales d'hélices, des pales d'éoliennes, des pales de turbines basse pression de moteurs d'avions, des pales de turbines pour centrales hydroélectriques, des hydroptères, des stabilisateurs d'avions, des véhicules de transport aérien ou maritime, des tuyaux, des tubes et des conduits.

**10.** Corps selon la revendication 9, ledit dispositif étant une aile d'avion et lesdites marches, sensiblement parallèle au bord d'attaque, dont la hauteur (h) est d'environ $1 \times 10^{-6}$ de corde d'aile locale près du bord d'attaque à 0,1 % de la corde locale près du bord de fuite de l'aile.

**11.** Corps selon la revendication 10, lesdites marches allant en largeur (d) d'environ $1 \times 10^{-5}$ de la corde locale près du bord d'attaque à environ 1 % de la corde locale près du bord de fuite de l'aile, éventuellement constituée d'un revêtement sur un corps existant ou d'un bord d'attaque et d'un panneau supérieur en fibre de carbone d'une seule pièce, sans joints ni rivets, généralement fabriqués séparément puis fixés à un caisson de voilure existant.

**12.** Corps selon l'une quelconque des revendications précédentes, étant au moins sensiblement constitué de métal, de polymère, de céramique ou de matériau composite et ledit profil étant produit par façonnage, revêtement ou impression 3D.

FIG. 1A

**FIG. 1B**

**FIG. 2**

**FIG. 3**

**FIG. 4**

**FIG. 5**

**FIG. 6**

**FIG. 7**

**FIG. 8**

**FIG. 9**

34

**FIG. 10**

FIG. 11

FIG. 12

**FIG. 13**

**FIG. 14**

**FIG. 15**

EP 3 363 733 B1

FIG. 16

FIG. 17

38

**FIG. 18**

**FIG. 19**

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62460784
- US 5772156 A
- US 7866609 B2
- EP 1283163 A2
- EP 0939028 A2
- US 3951360 A
- US 20090212165 A1
- US 4114836 A
- US 6027078 A
- US 4813631 A
- US 4575030 A
- US 5263667 A
- EP 0679572 A2
- US 7093792 B2
- US 4993663 A
- WO 2010115656 A1
- US 20140326834 A1
- US 6905092 B2
- US 4802642 A
- US 5983944 A
- GB 2477509 A
- US 20050232770 A1
- FR 2857650 A1

### Non-patent literature cited in the description

- **BASSOM, A. P. ; HALL, P.** The receptivity problem for O(1) wavelength Görtler vortices. *Proc. Roy. Soc. Land. A,* 1994, vol. 446, 499-516
- **BASSOM, A. P. ; SEDDOUGUI, S. O.** The receptivity problem for O(1) wavelength Görtler vortices. *Theoret. Comput. Fluid Dynamics,* 1995, vol. 7, 317-339
- **BERLIN, S. ; WIEGEL. M. ; HENNINGSON, D. S.** Numerical and experimental investigations of oblique boundary layer transition. *J. Fluid Mech.,* 1999, vol. 393, 23-57
- On the birth and evolution of disturbances in three-dimensional boundary layers. **BERTOLOTTI, F. P.** IUTAM Symposium on Nonlinear Instability and Transition in Three-Dimensional Boundary Layers. Springer, 1996, vol. 35, 247-256
- **BERTOLOTTI. F. P.** Response of the blasius boundary layer to free-stream vorticity. *Phys. Fluids,* 2003, vol. 9 (8), 2286-2299
- **BIPPES, H.** Basic experiments on transition in three-dimensional boundary layers dominated by crossflow instability. *Prog. Aerosp Sci,* 1999, vol. 35 (4), 363-412
- **BORODULIN, V. I. ; IVANOV. A. V. ; KACHANOV, Y. S. ; ROSCHEKTAEV, A. P.** Receptivity cocients at excitation of cross-flow waves by free-stream vortices in the presence of surface roughnesse. *J. Fluid Mech.,* 2013, vol. 716, 487-527
- **BORODULIN, V. I. ; KACHANOV, Y. S. ; KOPTSEV, D. B.** Experimental study of resonant interactions of instability waves in self-similar boundary layer with an adverse pressure gradient: I. tuned resonances. *J. Turbul.,* 2002, vol. 3 (62), 1-38
- **BREHM, C. ; KOEVARY, C. ; DACKERMANN, T ; FASEL, H. F.** Numerical investigations of the influence of distributed roughness on blasius boundary layer stability. *AIAA,* 2011, 2011-563
- **CANTWELL, C. D. ; MOXEY, D. ; COMERFORD, A. ; BOLIS, A. ; ROCCO, G. ; MENGALDO. G. ; GRAZIA, D. DE ; YAKOVLEV, S. ; LOMBARD, J. E. ; EKELSCHOT, D.** Nektar++: An open-source spectral/hp element framework. *Computer Physics Communications,* 2015, vol. 192, 205-219
- **CHOUDHARI, M.** Boundary-layer receptivity to three-dimensional unsteady vortical disturbances in free stream. *AIAA Paper,* 1994, 96-0181
- **CHOUDHARI, M. ; STREETT, C. L.** A finite reynolds number approach for the prediction of boundary-layer receptivity in localized regions. *Phys. Fluids A,* 1992, vol. 4, 2495-2514
- **CORKE, T. C. ; SEVER, A. BAR ; MORKOVIN, M. V.** Experiments on transition enhancements by distributed roughness. *Phys. Fluids,* 1986, vol. 29, 3199-3213
- **COSSU, C. ; BRANDT, L.** Stabilization of Tollmien-Schlichting waves by finite amplitude optimal streaks in the blasius boundary layer. *Phys. Fluids,* 2002, vol. 14 (8), L57-L60
- **COSSU, C. ; BRANDT. L.** On Tollmien-Schlichting-like waves in streaky boundary layers. *Eur. J. Mech. B/Fluids,* 2004, vol. 23, 815-833
- Modeling the effects of steps on boundary-layer transition. **CROUCH, J. ; KOSORYGIN, V. ; NG, L.** IUTAM Symposium on Laminar-Turbulent Transition (ed. R. Govindara-jan), Fluid Mechanics and Its Applications. Springer, 2006, vol. 78, 37-44

- **CROUCH, J. D.** Distributed excitation of tollmien-schlichting waves by vortical free stream disturbances. *Phys. Fluids,* 1994, vol. 6 (1), 217-223
- **DAVIES. C. ; CARPENTER, P. W.** Numerical simulation of the evolution of Tollmien-Schlichting waves over finite compliant panels. *J. Fluid Mech.,* 1996, vol. 335, 361-392
- **DENIER, J. P ; HALL, P. ; SEDDOUGUI, S. O.** On the receptivity problem for Görtler vortices: vortex motions induced by wall roughness. *Phil. Trans. R. Soc. A,* 1991, vol. 335, 51-85
- **DIETZ, A. J.** Local boundary-layer receptivity to a convected free-stream disturbance. *J. Fluid Mech.,* 1999, vol. 378, 291-317
- **DOWNS, R. D. ; FRANSSON, J. H. M.** Tollmien-Schlichting wave growth over spanwise-periodic surface patterns. *J. Fluid Mech.,* 2014, vol. 754, 39-74
- **DRAZIN, P. G. ; REID, W. H.** Hydrodynamic Stability. Combridge University Press, 1981
- **DUCK, P. W. ; RUBAN, A. I. ; ZHIKHAREV, C. N.** Generation of Tollmien-Schlichting waves by free-stream turbulence. *J. Fluid Mech.,* 1996, vol. 312, 341-371
- **EDELMANN, C. ; RIST, U.** Impact of forward-facing steps on laminar-turbulent transition in transonic flows without pressure gradient. *In 51st AIAA Aerospace Sciences Meeting including the New Horizons Forum and Aerospace Exposition,* 2013
- **EDELMANN, C. ; RIST, U.** Impact of forward-facing steps on laminar-turbulent transition in transonic flows. *AIAA Journal,* 2015, vol. 53 (9), 2504-2511
- **FASEL, H. ; KONZELMANN. U.** Non-parallel stability of a flat plate boundary layer using the complete navier-stokes equations. *J. Fluid Mech.,* 1990, vol. 221, 311-347
- **FRANSSON, J. H. M. ; BRANDT, L. ; TALAMELLI, A. ; COSSU, C.** Experimental study of the stabilization of Tollmien-Schlichting waves by finite amplitude streaks. *Phys. Fluids,* 2005, vol. 17 (5), 054110
- **FRANSSON, J. H. M. ; TALAMELLI, A. ; BRANDT, L. ; COSSU, C.** Delaying transition to turbulence by a passive mechanism. *Phys. Rev. Lett.,* 2006, vol. 96, 064501
- **GAO, B. ; PARK, D. H. ; PARK, S. O.** Stability analysis of a boundary layer over a hump using parabolized stability equations. *Fluid Dyn. Res.,* 2011, vol. 43 (5), 055503
- **GARZON, G. A. ; ROBERTS, M. W.** Effect of a small surface wave on boundary-layer transition. *AIAA,* 2013, 2013-3110
- **GASTER, M.** On the generation of spatially growing waves in a boundary layer. *J. Fluid Mech.,* 1965, vol. 22, 433-441
- **GOLDSTEIN, M. E.** The evolution of Tollien-Schlichting waves near a leading edge. *J. Fluid Mech.,* 1983, vol. 127, 59-81
- **GOLDSTEIN, M. E.** Scattering of acoustic waves into Tollmien-Schlichting waves by small streamwise variations in surface geometry. *J. Fluid Mech.,* 1985, vol. 154, 509-529
- **GOLDSTEIN, M. E. ; HULTGREN, L. S.** A note on the generation of tollmien-schlichting waves by sudden curvature change. *J. Fluid Mech.,* 1987, vol. 181, 519-525
- **GOLDSTEIN, M. E. ; LEIB, S. J.** Three-dimensional boundary layer instability and separation induced by small-amplitude streamwise vorticity in the upstream flow. *J. Fluid Mech.,* 1993, vol. 246, 21-41
- The effect of wing sweep on laminar flow. **GRAY, W. E.** Tech. Rep. RAE TM Aero. British Royal Aircraft Establishment, 1952, vol. 255
- **HALL, P.** Görtler vortices in growing boundary layers: The leading edge receptivity problem, linear growth and the nonlinear breakdown stage. *Mathematika,* 1990, vol. 37 (02), 151-189
- **HAMMOND, D. A. ; REDEKOPP, L. G.** Local and global instability properties of separation bubbles. *European Journal of Mechanics - B/Fluids,* 1998, vol. 27 (2), 145-164
- **HERBERT, T.** Secondary instability of boundary-layers. *Annu. Rev. Fluid Mech.,* 1988, vol. 20, 487-526
- A semi-empirical theory for the growth and bursting of laminar separation bubbles. **HORTON. H. P.** PhD Dissertation. University of London, 1968
- **HUAI, X. ; JOSLIN, R. D. ; PIOMELLI, U.** Large-eddy simulation of trantion to turbulence in boundary layers. *Theor. Comput. Fluid Dyn.,* 1997, vol. 9, 149-163
- **JONES, B. M.** *Stalling. J. R. Aero. Soc.,* 1938, vol. 38, 747-770
- **KACHANOV, Y. S.** Physical mechanisms of laminar-boundary-layer transition. *Annu. Rev. Fluid Mech.,* 1994, vol. 26, 4110482
- **KACHANOV, Y. S. ; KOZLOV, V. V. ; LEVCHENKO, V. Y.** Origin of TollmienSchlichting waves in boundary layer under the influence of external disturbances. *Fluid Dyn.,* 1979, vol. 13, 704-711
- Transformation of external disturbances into the boundary layer waves. **KACHANOV, Y. S. ; KOZLOV, V. V ; LEVCHENKO, V. Y. ; MAKSIMOV, V. P.** Sixth International Conference on Numerical Methods in Fluid Dyn. Springer Berlin Heidelberg, 1979, 299-307
- **KACHANOV, Y. S. ; LEVCHENKO, V. Y.** The resonant interaction of disturbances at laminar-turbulent transition in a boundary layer. *J. Fluid Mech.,* 1984, vol. 138, 209-247

- **KARNIADAKIS, G. ; ISRAELI, M. ; ORSZAG, S.** High-order splitting methods for the incompressible navier-stokes equations. *J. Comput. Phys.,* 1991, vol. 97 (2), 414-443
- **KENDALL, J. M.** Experimental study of disturbances produced in a pre-transitional laminar boundary layer by weak free stream turbulence. *AIAA Paper,* 1985, 85-1695
- **KENDALL, J. M.** Boundary-layer receptivity to free stream turbulence. *AIAA Paper,* 1990, 90-1504
- Studies on laminar boundary-layer receptivity to free stream turbulence near a leading edge. **KENDALL, J. M.** Boundary Layer Stability and Transition to Turbulence. ASME FED, 1991, vol. 114, 23-30
- **KERSCHEN, E. J.** Boundary layer receptivity. *AIAA,* 1989, 89-1109
- **KERSCHEN, E. J.** Boundary layer receptivity theory. *Appl. Mech. Rev,* 1990, vol. 43, S152-S157
- **KLEBANOFF. P. S. ; TIDSTROM, K. D. ; SARGENT, L. M.** The three-dimensional nature of boundary-layer instability. *J. Fluid Mech.,* 1962, vol. 12 (1), 1-34
- **KOZLOV, V. V. ; RYZHOV, O. S.** Receptivity of boundary layers: Asymptotic theory and experiment. *Proc. R. Soc. London A,* 1990, vol. 429, 341-373
- **LAURIEN, E. ; KLEISER, L.** Numerical simulation of boundary-layer transition and transition control. *J. Fluid Mech.,* 1989, vol. 199, 403-440
- **MORKOVIN, M. V.** Critical evaluation of transition from laminar to turbulent shear layers with emphasis on hypersonically travelling bodies. *Tech. Rep. AFFDL-TR 68-149. US Air Force Flight Dynamics Laboratory, Wright Patterson Air Force Base,* 1969
- The many faces of transition. **MORKOVIN, M. V.** Viscous Drag Reduction. Plenum, 1969, 1-31
- **MURDOCK, J. W.** The generation f a Tollmien-Schlichting wave by a sound wave. *Proc. R. Soc. Lond. A,* 1980, vol. 372, 571-534
- **NENNI, J. P ; GLUYAS, G. L.** Aerodynamic design and anlaysis of an LFC surface. *Astronautics and Aeronautics,* 1966, vol. 4 (7), 1-31
- **NISHIOKA, M. ; MORKOVIN, M. V.** Boundary-layer receptivity to unsteady pressure gradients: experiments and overview. *J. Fluid Mech.,* 1986, vol. 171, 219-261
- **PARK, D. ; PARK, S. O.** Linear and non-linear stability analysis of incompressible boundary layer over a two-dimensional hump. *Computers & Fluids,* 2013, vol. 73, 80-96
- **PERRAUD, J. ; ARNAL, D. ; SERAUDIE. A. ; TRAN, D.** Laminar-turbulent transition on aerodynamic surfaces with imperfections. *NATO Research and Technology Organisation Applied Vehicle Technology Panel 111 Symposium,* 2004
- **REED, H. L. ; SARIC, W. S.** Stability of three-dimensional boundary layers. *Annu. Rev. Fluid Mech.,* 1989, vol. 21, 235-84
- **REIBERT, M. S. ; SARIC, W. S. ; CARRILLO, JR. R. B. ; CHAPMAN, K. L.** Experiments in nonlinear saturation of stationary crossflow vortices in a swept-wing boundary layer. *AIAA,* 1996, 96-0184
- Nonlinear effects of two-dimensional and three-dimensional disturbances on laminar separation bubbles. **RIST, U.** Nonlinear Instability of Nonparallel Flows. Springer-Verlag, 1993, 330-339
- **ROGLER, H. L. ; RESHOTKO, E.** Disturbances in a boundary layer introduced by a low intensity array of vortices. *SIAM J. Appl. Mech.,* 1975, vol. 28 (2), 431-426
- **RUBAN, A. I.** On tollmien-schlichting wave generation by sound. *Izv. Akad. Nauk SSSR, Mekh. Zhidk. Gaza,* 1984, vol. 5, 44
- On tollmien-schlichting wave generation by sound. **RUBAN, A. I.** Laminar-turbulent transition. Springer Berlin Heidelberg, 1985, 313-320
- **RUBAN, A. I. ; BERNOTS, T. ; PRYCE, D.** Receptivity of the boundary layer to vibrations of the wing surface. *Journal of Fluid Mechanics,* 2013, vol. 723, 480-528
- Low-speed experiments: Requirements for stability measurements. **SARIC, W. S.** Instability and Transition (ed. M. Y. Hussaini & R. G. Voight), ICASE/NASA LaRC Series. Springer-Verlag, 1990, vol. 1, 162-174
- **SARIC, W. S.** Görtler vortices. *Annu. Rev. Fluid Mech.,* 1994, vol. 26, 379-409
- **SARIC, W. S. ; CARRLLLO, JR. R. B. ; REIBERT, M. S.** Nonlinear stability and transition in 3-d boundary layers. *Meccanica,* 1998, vol. 33, 469-487
- **SARIC, W. S. ; REED, H. L. ; KERSCHEN, E. J.** Boundary-layer receptivity to free-stream disturbances. *Annu. Rev. Fluid Mech.,* 2002, vol. 34, 251-276
- **SARIC, W. S. ; REED, H. L. ; WHITE, E. B.** Stability and transition of three-dimensional boundary layers. *Annu. Rev. Fluid Mech.,* 2003, vol. 35, 413-40
- **SAYADI, T. ; HAMMAN, C. W. ; MOIN, P.** Direct numerical simulation of complete h-type and k-type transitions with implications for the dynamics of turbulent boundary layers. *J. Fluid Mech.,* 2013, vol. 724, 480-509
- **SCHLICHTING, H. ; GERSTEN, K.** Boundary-Layer Theory. Mac Graw-Hill, 1968
- **SCHUBAUER, G. B. ; SKRAMSTAD, H. K.** Laminar-boundary-layer oscillations and transition on a flat plat. *NASA TR-909.,* 1948
- **SHAHINFAR, S ; SATTARZADEH, S. S. ; FRANSSON, J. H. M. ; TALAMELLI, A.** Revival of classical vortex generators now for transition delay. *Phys. Rev. Lett.,* 2012, vol. 109, 074501

- **STUART, J. T.** Hydrodynamic stability. In Laminar Boundary Layer. Oxford University Press, 1963, 492-579
- **TEMPLELMANN, D. T.** Numerical study of boundary-layer receptivity on a swept wing. *AIAA,* 2011, 2011-3294
- Global linear instability in laminar separated boundary layer flow. **THEOFILIS, V.** Proceedings of the IUTAM Laminar-Turbulent Symposium V. 2000, 663-668
- **WANG, Y. X. ; GASTER, M.** Effect of surface steps on boundary layer transition. *Exp. Fluids,* 2005, vol. 39 (4), 679-686
- **WÖRNER, A. ; RIST, U. ; WAGNER, S.** Humps/steps influence on stability characteristics of two-dimensional laminar boundary layer. *AIAA,* 2003, vol. 41 (2), 192-197
- **WU, X. S.** On local boundary-layer receptivity to vortical disturbances in the free stream. *J. Fluid Mech.,* 2001, vol. 449, 373-393
- **WU, X. S.** Receptivity of boundary layers with distributed roughness to vortical and acoustic disturbances: a second-order asymptotic theory and comparison with experiments. *J. Fluid Mech.,* 2001, vol. 431, 91-133
- **WU, X. S. ; HOGG, LINDA W.** Acoustic radiation of Tollmien-Schlichting waves as they undergo rapid distortion. *J. Fluid Mech.,* 2006, vol. 550, 307-347
- **XU, H. ; SHEHWIN, S. ; HALL, P. ; WU, X.S.** The behaviour of Tollmien-Schlichting waves undergoing small-scale localised distortions. *J. Fluid Mech.,* 2016, vol. 792, 499-525
- **YOUNG, A. D. ; HORTON, H. P.** Stalling. *AGARD CP,* 1966, vol. 4, 779-811
- **ZAVOL'SKII, N. A. ; REUTOV, V. P. ; RYBUSHKINA, G. V.** Excitation of TollmienSchlichting waves by acoustic and vortex disturbance scattering in boundary layer on a wavy surface. *J. Appl. Mech. Tech. Phys,* 1983, vol. 24, 355-361